# EUROPEAN PATENT APPLICATION

(11) **EP 4 822 660 A1**
(43) Date of publication of application: **14.10.2026**
(21) Application number: 26162230.2
(22) Date of filing: 04.03.2026
(51) Int. Cl.: G07C 9/00, B60R 25/24

(54) **EMBEDDED KEY FOB VEHICLE CONTROL SYSTEM**

(30) Priority: 10.04.2025 US 202563786643 P; 26.08.2025 US 202563870441 P
(71) Applicant: Light Wave Technology Inc., St-Laurent, Québec H4N 1M6 (CA)
(72) Inventor: WISNIA, Jack, Dollard-Des Ormeaux, Québec, H9A 3H5 (CA); SPEERS, James, St. Albert, Alberta, T8N 3R2 (CA); NELSON, Robert, Westmount, Québec, H3Y 2X2 (CA)
(74) Representative: Kramer Barske Schmidtchen Patentanwälte PartG mbB

(57) **Abstract**

The present disclosure presents embedded key fob vehicle control devices, systems and methods that can be an improved alternative to the state-of-the-art KIBs. One of the main advantages over the state-of-the-art of the vehicle control devices and systems described herein is the more reliable or more secure control and/or communication with the PKES system. Avoiding the need for wireless communication to the embedded key fob and using direct connections to the PKES ensures that unauthorized use of the vehicle and of the embedded key fob is prevented. Additionally, the present disclosure presents devices using timing-based control of wireless communications from the PKES system to the embedded key fob for various PKES signal sequences. Various embodiments of the proposed devices may allow the driver's device to act as an equivalent alternative to a key fob, thereby providing it with most or all native features associated with key-fob-and-PKES interactions.

## Description

### Technical Field

The present application relates to systems, devices and methods for controlling vehicles equipped with passive keyless entry and start (PKES) systems.

### Background

Most vehicles today operate using a smart key. Such vehicles communicate wirelessly with the driver's smart key to authenticate the driver so as to allow the driver to operate the vehicle without inserting the key and instead by pushing a start button in the car. Some such vehicles use wireless communications to determine if the smart key fob is inside or outside of the vehicle, and also to allow for unlocking and locking of the vehicle doors by using buttons or sensors at the exterior of the car door instead of requiring the driver to use the key mechanically.

Smart keys can provide the convenience that no manipulation of the key may be necessary to operate the vehicle so long as the key is carried by the driver. Most vehicles are sold with two smart keys for use by two drivers. While additional keys can be ordered from the car manufacturer, these come at substantial additional cost and require planning for provisioning keys for each driver.

In recent years various vehicle control systems have been developed to allow the vehicle's user to replace the key fobs by alternative portable and/or personal devices (e.g., smartphones), thereby allowing for implementation, adding and/or sharing of alternative (e.g., virtual) key fobs. Various embodiments of such systems and devices can be found in a plurality of state-of-the-art disclosure, e.g., the US patents US 11,285,917, US 10,991,237 or the US publication No. US 2016/0203661, etc.

Various state-of-the-art alternative key fob apparatuses and devices or methods for providing vehicle control using alternatives to key fobs rely on wireless communication with the passive keyless entry and start (PKES) systems, e.g., via low frequency or high frequency antennas and communications.

However, it has been shown that using wireless communication to exchange information between the KIB and the PKES system of the vehicle can be suboptimal in some case. Therefore, there is a need to develop KIB systems that do not rely on wireless communications with the PKES system to function.

### Summary

The present disclosure describes key fob vehicle control devices, systems and methods that can be an improved alternative to the state-of-the-art KIBs. Various embodiments of the proposed methods or devices proposed in the present document can allow the driver's device (e.g., smartphone, smartwatch, Bluetooth^{®} device, UBW device, etc.) to act as an equivalent alternative to a key fob so that the driver's device is provided with the same native features associated with key-fob-and-PKES interactions. One of the most advantageous features of the methods or devices proposed herein, is the control of communications from the PKES system (e.g., the PKES antennas) to the embedded key fob of the e-Key module, which results in the PKES system determining (from the response sent by the embedded key fob) that the embedded key-fob is located at a position corresponding to the driver's device.

One of the main advantages over the state-of-the-art of the vehicle control devices and systems described herein is the more reliable or more secure control and/or communication with the PKES system. Avoiding the need for wireless communication to the embedded key fob and using direct connections to the PKES ensures that unauthorized use of the vehicle and of the embedded key fob is prevented.

Additionally, the present disclosure presents devices using timing-based control of wireless communications from the PKES system to the embedded key fob for various PKES signal sequences.

One broad aspect of the present disclosure is a vehicle control device for use with a vehicle having a passive keyless entry and start (PKES) system, the vehicle control device comprising: (1) a wireless interface for local communication with a driver's device, the wireless interface providing an authentication of the driver's device; (2) an analyzer for determining a position of the driver's device based on characteristics of signals from the local communication when the authentication from the wireless interface is provided, the position being one of: (i) inside the vehicle, (ii) outside of the vehicle and within a near-the-vehicle threshold, and (iii) outside of the near-the-vehicle threshold; (3) a key fob associated with the PKES system, the key fob having an antenna input for receiving challenge communications from the PKES system and having an antenna output connected to a radio frequency (RF) antenna for sending response communications to the PKES system, the key fob wirelessly sending a response communication to the PKES system; and (4) one selected from the group consisting of: (a) a key fob antenna; a first switch connected between the key fob antenna and the antenna input of the key fob; a challenge message receiver detecting a time point in a PKES challenge transmission; the position determined by the analyzer as outside of the vehicle and within a near-the-vehicle threshold identifying one of a plurality of door locations of the vehicle where the driver's device is located; and a first control circuit connected to the analyzer for controlling the first switch to selectively connect and disconnect the key fob from the key fob antenna as a function of the position and the time point, (b) a key fob antenna; a first switch connected between the key fob antenna and the antenna input of the key fob; a challenge message receiver detecting a time point in a PKES challenge transmission; a plurality of door contact connections each corresponding to one of a plurality of door locations of the vehicle; and a second control circuit connected to the plurality of door contact connections and to the analyzer for controlling the first switch to selectively connect and disconnect the key fob from the key fob antenna as a function of the position and the time point, (c) an internal antenna switch and at least one external antenna switch connected to the antenna input of the key fob; a plurality of door contact connections each corresponding to one of a plurality of door locations of the vehicle; and a third control circuit connected to the plurality of door contact connections and to the analyzer for controlling the an internal antenna switch and the at least one external antenna switch to selectively connect and disconnect the antenna input of the key fob as a function of the position; and (d) an internal antenna switch and at least one external antenna switch connected to the antenna input of the key fob; the position determined by the analyzer as outside of the vehicle and within a near-the-vehicle threshold identifying one of a plurality of door locations of the vehicle where the driver's device is located; and a fourth control circuit connected to the analyzer for controlling the an internal antenna switch and the at least one external antenna switch to selectively connect and disconnect the antenna input of the key fob as a function of the position; (5) wherein, when the position is outside of the vehicle and within a near-the-vehicle threshold, the controlling of the first switch allows the key fob to respond to the PKES challenge transmission to allow the PKES system to determine that the key fob is located at the one of the plurality of door locations; (6) wherein, when the position is inside the vehicle, the controlling of the first switch allows the key fob to respond to the PKES challenge transmission to allow the PKES system to determine that the key fob is located inside the vehicle; and (7) wherein, when the driver's device is not authenticated or when the position of the driver's device is determined to be outside of the near-the-vehicle threshold or is not detected, the control circuit disables the key fob or disconnects the antenna input, thereby resulting in the PKES interpreting an absence of the response communication as corresponding to an absence of any authorized key fob.

In some embodiments, the device further comprises a processor and non-transient memory storing instructions that, when executed by the processor, causes the processor to perform functions of at least one of the analyzer, any one of the control circuits and, optionally, the challenge message receiver.

In some embodiments, the driver's device is a smartphone.

In some embodiments, the wireless interface comprises a Bluetooth^{®} device, an ultra-wide-band device or a Sub-GHz communication device.

In some embodiments, the position of the driver's device is a precise location of the driver's device relative to the vehicle, and wherein the analyzer determines the precise location based on characteristics of signals from the ultra-wide-band device or the Sub-GHz communication device.

In some embodiments, the position of the driver's device is determined by detecting a triggering signal from at least one outside request switch of the vehicle.

Another broad aspect of the present disclosure is a device for use with a vehicle having a passive keyless entry and start (PKES) system, the device comprising: (1) a wireless interface for local communication with a driver's device, the wireless interface providing an authentication of the driver's device; (2) an analyzer for determining a position of the driver's device based on characteristics of signals from the local communication when the authentication from the wireless interface is provided, the position being one of: (i) inside the vehicle, (ii) outside of the vehicle and within a near-the-vehicle threshold, and (iii) outside of the near-the-vehicle threshold; (3) a key fob associated with the PKES system, the key fob having an antenna input for receiving challenge communications from the PKES system and having an antenna output connected to a radio frequency (RF) antenna for sending response communications to the PKES system, the key fob wirelessly sending a response communication to the PKES system; (4) a first connectable connection being electronic wiring for connecting from the antenna input of the key fob to at least one outside-antenna of the PKES system for receiving a challenge communication from the at least one outside-antenna of the PKES system; (5) a second connectable connection for receiving a challenge communication from an inside-antenna of the PKES system; and (6) a control circuit comprising: (a) a position input for receiving, from the analyzer, information about the position of the driver's device, and (b) switches connected to the key fob for selectively connecting the key fob to one or none of the first connectable connection and the second connectable connection based on the determined position of the driver's device; (7) wherein, when the position of the driver's device is determined to be inside the vehicle, the control circuit disconnects any connected second connectable connection and connects the antenna input to the second connectable connection so that the response communication corresponds to an inside-antenna of the PKES system, thereby resulting in the PKES interpreting the response communication as corresponding to an authorized key fob being located inside the vehicle; (8) wherein, when the position of the driver's device is determined to be within a near-the-vehicle threshold and not inside the vehicle, the control circuit connects the antenna input of the key fob to the first connectable connection so that the response communication corresponds to an outside-antenna of the PKES system, thereby resulting in the PKES interpreting the response communication as corresponding to the authorized key fob being located near the at least one outside-antenna; and (9) wherein, when the driver's device is not authenticated or when the position of the driver's device is determined to be outside of the near-the-vehicle threshold or is not detected, the control circuit disables the key fob or disconnects the antenna input from the first connectable connection and from the second connectable connection, thereby resulting in the PKES interpreting an absence of the response communication as corresponding to an absence of any authorized key fob.

In some embodiments, the device further comprises a third connectable connection comprising electronic wiring for connecting to at least one outside request switch, wherein the control circuit is further connectable to the third connectable connection for receiving or sending any triggering signal of the at least one outside request switch.

In one embodiment, the third connectable connection is for connecting to each one of a plurality of the outside request switches, wherein the control circuit is connectable to the plurality of the outside request switches using the third connectable connection for receiving or sending any triggering signal of the plurality of outside request switches.

In some embodiments, the first connectable connection is for connecting to a plurality of the at least one outside-antenna of the PKES system, wherein when the position of the driver's device is determined to be within a near-the-vehicle threshold and not inside the vehicle, and when the triggering signal is detected or sent on any one of the plurality of the outside request switches using the third connectable connection, and the control circuit connects the key fob to one of the first connectable connection for connecting one of the plurality of outside-antennas having a closest location to a location of the triggered outside request switch to receive a challenge communication from the PKES system for the one of the plurality of outside-antennas, thereby resulting in the PKES interpreting the response communication as corresponding to the authorized key fob being located near the one outside-antenna having a closest location to a location of the triggered outside request switch.

In some embodiments, (a) the plurality of request switches comprises: (i) a driver's door request switch, (ii) a front-passenger's door request switch, (iii) an exterior trunk request switch, or (iv) a trunk close-and-lock request switch, (b) the plurality of the outside-antennas comprises: (i) a driver's door outside-antenna, (ii) a front-passenger's door outside-antenna, or (iii) a rear outside-antenna; and wherein, when the position of the driver's device is determined to be within a near-the-vehicle threshold and not inside the vehicle: (i) the control circuit connects the key fob to the driver's door outside-antenna when the detected triggering signal is from a triggering of the driver's door request switch; (ii) the control circuit connects the key fob to the front-passenger's door outside-antenna when the detected triggering signal is from a triggering of the front-passenger's door request switch; and (iii) the control circuit connects the key fob to the rear outside-antenna when the detected triggering signal is from a triggering of the exterior trunk request switch or is from a triggering of the trunk close-and-lock request switch.

In some embodiments, the at least one outside-antenna of the PKES system comprises a trunk or tailgate outside-antenna and at least one additional outside-antenna; wherein the plurality of the outside request switches is free from any trunk or tailgate outside request switch; wherein, when the position of the driver's device is determined to be within the near-the-vehicle threshold and not inside the vehicle, the first connectable connection is connected to the trunk or tailgate outside-antenna until the triggering signal is detected or sent on any one of the plurality of the outside request switches; and wherein, when the triggering signal is detected or sent, the control circuit connects the key fob to one of the first connectable connection for connecting one of the plurality of additional outside-antennas having a closest location to the location of the triggered outside request switch.

In some embodiments, (a) the plurality of request switches comprises: (i) a driver's door request switch, or (ii) a front-passenger's door request switch, (b) the plurality of the additional outside-antennas comprises: (i) a driver's door outside-antenna, or (ii) a front-passenger's door outside-antenna, (c) wherein, when the position of the driver's device is determined to be within a near-the-vehicle threshold and not inside the vehicle: (i) the control circuit connects the key fob to the driver's door outside-antenna when the detected triggering signal is from a triggering of the driver's door request switch; or (ii) the control circuit connects the key fob to the front-passenger's door outside-antenna when the detected triggering signal is from a triggering of the front-passenger's door request switch.

In some embodiments, the device further comprises a processor and non-transient memory storing instructions that, when executed by the processor, causes the processor to perform functions of at least one of the analyzer and the switch control circuit.

In one embodiment, further comprising a fourth connectable connection comprising electronic wiring for connecting to at least one inside trigger wire for sending an engine-start-or-stop request or command to an engine control unit of the PKES system, wherein the device uses the fourth connectable connection for sending the engine-start request to the PKES system.

In some embodiments, the fourth connectable connection comprises: (i) a first inside wire connection for connecting to a brake-pedal wire connection between a brake pedal of the vehicle and the PKES system, and (ii) a second inside wire connection for connecting to a start/stop engine wire connection between a start/stop button of the vehicle and the PKES system, wherein the first inside wire connection and the second wire connection are usable by the control circuit to send the engine-start request or command to the engine control unit of the PKES system, the sending of the engine-start request or command comprising: (i) sending a brake-pedal signal to the engine control unit of the PKES system using the first inside wire connection; and (ii) sending a start/stop engine request signal to the engine control unit of the PKES system using the second inside wire connection.

In some embodiments, the device sends the sending of the engine-start request or command comprises: communication with an ignition system (IGN) of the PKES system, or sending status data to the engine control unit.

In some embodiments, the sending of the triggering signal comprises generating and sending the triggering signal to the PKES system via the third connectable connection, thereby simulating a manual triggering of the plurality of outside request switches.

In some embodiments, the generating and sending the triggering signal is executed when a lock or unlock command is received from the driver's device.

In some embodiments, the driver's device comprises a processor and memory that can store program code, wherein the processor, when executing the program code, causes the smartphone to provide an e-Key application.

In some embodiments, the analyzer comprises the processor of the driver's device, and wherein the determining of the position is completed, in at least in part, using the processor of the driver's device.

In some embodiments, the driver's device is a smartphone.

In some embodiments, the wireless interface comprises a Bluetooth^{®} device, an ultra-wide-band device or a Sub-GHz communication device.

In some embodiments, at least one of the connectable connections is a wired connection to a low-frequency challenge communication output from the PKES system or a wired connection to a bus of the PKES system.

In some embodiments, the second connectable connection comprises a RF antenna connectable RF antenna for wirelessly receiving the challenge communication from the inside-antenna of the PKES system.

In some embodiments, the second connectable connection comprises a wired connection electronic wiring for connecting from the antenna input of the key fob to the inside-antenna of the PKES system for receiving the challenge communication from the inside-antenna of the PKES system.

In some embodiments, when the position of the driver's device is determined to be within a near-the-vehicle threshold and not inside the vehicle, the control circuit further disconnects any connected first connectable connection.

Yet another broad aspect of the disclosure is a method for operating a vehicle having a passive keyless entry and start (PKES) system by selectively connecting a key fob of an embedded key fob vehicle control system to antenna signals of the PKES system as a function of a driver's device position relative to the vehicle, the method comprising: (A) detecting and authenticating the driver's device; (B) establishing one of: (i) a wired connection path connecting challenge communications from the PKES destined for an outside-antenna to a key fob antenna input; and (ii) a connection between the key fob antenna input and a key fob antenna for receiving challenge communications from the PKES system; (C) determining a position of the driver's device relative to the vehicle; and (D) when the driver's device is detected and authenticated: (i) when the position is determined to be inside the vehicle, performing one of: (a) revealing the key fob, (b) powering the key fob, (c) connecting a key fob antenna output to a radio frequency (RF) antenna for transmitting a key fob communication to the PKES, and (d) connecting the PKES system to the key fob antenna input so that an inside-antenna challenge communication from PKES is received by the key fob using one of: (1) a wired connection between the key fob antenna input and a PKES component associated with an inside-antenna of the PKES system, or (2) a key fob antenna connection between the key fob antenna input and the key fob antenna; so that a response communication from the key fob in response to the inside-antenna challenge communication results in the PKES considering that the key fob is located inside the vehicle; (ii) when the position is determined to be within a near-the-vehicle threshold and not inside the vehicle, performing one of: (a) connecting, using at least one wired outside-antenna connection, a PKES component associated with an outside-antenna of the PKES as a function of: (1) the determined position of the driver's device, or (2) a received triggering request switch signal from the outside-antenna, so that the key fob antenna input receives only an outside-antenna challenge communication therefrom; or (b) determining a time point in a PKES challenge transmission and performing a timing-based control of the key fob antenna connection between the key fob antenna input and the key fob antenna as a function of the determined time point and one of: (1) the determined position of the driver's device; or (2) the received triggering request switch signal from the outside-antenna, so that a response communication from the key fob in response to outside-antenna challenge communications results in the PKES considering that the key fob is located (I) nearest the determined position of the driver's device or (I) nearest the outside-antenna; and (iii)
when the position of the driver's device is not detected, not authenticated or is determined to be outside of the near-the-vehicle threshold, disabling the key fob or prevent any challenge communication by disconnecting the key fob antenna input from any wired connection path connecting challenge communications sent from the PKES or from the key fob antenna.

In some embodiments, when the position is determined to be within a near-the-vehicle threshold and not inside the vehicle, the connecting the response communication to the key fob comprises detecting any triggering of a request switch of the PKES system and momentarily connecting to the input of the key fob the challenge communication sent from the PKES to an outside-antenna corresponding to the triggered request switch to the key fob.

In some embodiments, when the position is determined to be within a near-the-vehicle threshold and not inside the vehicle, the determining of the time point and the performing of the timing-based control are performed, wherein the timing-based control comprises: (i) disconnecting the key fob antenna from the key fob antenna input or attenuating signals from the PKES system received by the key fob antenna before it reaches the key fob antenna input and (ii) connecting the key fob antenna to the key fob antenna input or amplifying signals from the PKES system received by the key fob antenna before it reaches the key fob antenna input; as a function of the determined time point, on a length individual signals of a signal sequence from the PKES system, on an order of the individual signals in the signal sequence from the PKES system, and (I) the determined position of the driver's device or (II) the received triggering request switch signal from the outside-antenna.

In some embodiments, the determining of the position comprises determining a distance between a transceiver of the embedded key fob vehicle control system and the driver's device based on a signal strength of wireless communications therebetween.

In some embodiments, the position is determined using ultra-wide-band or Bluetooth^{®} or Sub-GHz communication.

In some embodiments, the establishing the wired connection path comprises selectively closing a switch on the wired connection path.

In some embodiments, the challenge communication of the PKES system is a first bus communication to the inside-antenna when the driver's device is determined to be located inside the vehicle or is a second bus communication to the outside-antenna when the driver's device is determined to be located outside the vehicle within the near-the-vehicle threshold.

### Brief Description of the Drawings

The invention will be better understood by way of the following detailed description of embodiments of the invention with reference to the appended drawings, in which:
Figure **1A** presents a flow chart of some embodiments of the proposed method of use of the e-Key module (embedded key vehicle control system);
Figure **1B** presents a flow chart of embodiments of the proposed method of use of the e-Key module when the PKES system is free from a wired connection dedicated to connect the request switches of the trunk or tailgate of the vehicle to its PKES controller.
Figure **1C** presents an exemplary embodiment of a PKES system comprising a PKES controller and a plurality of PKES antennas located around the vehicle.
Figure **2A** presents a block diagram showing connections and wiring of one embodiment of the proposed e-Key module to the original equipment manufacturer (OEM) of the vehicle's passive keyless entry and start (PKES) system;
Figure **2B** shows one embodiment using T-connectors **299** connected/installed between various PKES elements (e.g., inside-antenna, outside-antennas, request switches, etc.) and the PKES controller.
Figure **3A** presents a schematic representation of some of the units and components of the proposed e-Key module including a wireless receiver for receiving a wireless (RF) challenge communication from the inside-antenna of the PKES system;
Figure **3B** presents a schematic representation of some of the units and components of the proposed e-Key module including a wired connection to the inside-antenna of the PKES system;
Figure **3C** presents a schematic representation of some of the units and components of alternative embodiments of the proposed e-Key module using timed connections to the key fob antenna in order to control the key fob response sent to the PKES system, when the location of the driver is determined using the detection of a request signal on the wired connections to the request switches;
Figure **3D** presents a schematic representation of some of the units and components of alternative embodiments of the proposed e-Key module using timed connections to the key fob antenna in order to control the key fob response sent to the PKES system, when a precise location of the driver can be determined, e.g., using wireless signals (Bluetooth^{®}, UWB, etc.) with the driver's device;
Figure **3E** shows one embodiment of the control circuit **204** comprising a logic circuit that can enabling an embodiment of the method presented in Figure **1B** (specially steps **S160** and **S161).**
Figure **4A** shows a flow chart of one possible embodiment of the proposed method which relies on timed connections to the key fob antenna based on the request signal detected on the wired connections to the request switches;
Figure **4B** shows a flow chart of one possible embodiment of the proposed method which relies on timed connections to the key fob antenna based on the determined precise location of the driver's device;
Figure **5A** shows a common signal sequence comprising a first cryptographic challenge message followed by a sequence of beacons from the various antennas of a typical PKES using a prompt as its trigger. Also shown are various possibilities of detection of the time point of interest within the signal sequence.
Figure **5B** shows the effect achieved by the proposed timing-based control of the wireless PKES signals in the case of the embodiment of Figure **5A** (similarly to the controlled wired connection to the PKES antennas), where the strength of various signals from the PKES system are being modulated before being transmitted to and/or received by the key fob of the e-Key module.
Figure **5C** shows a flow chart of various steps completed by the proposed e-Key module to force the PKES system to behave as desired, in the case where the PKES system may not have to be triggered by a prompt and continuously sends sequences of ID signals (as illustrated in Figure **3D**) to detect the presence of a corresponding key fob and determine its location relative to the vehicle.
Figure **5D** shows ID signal sequences that are being continuous or repeatedly broadcasted by the PKES system and may not require any prompt trigger to be initiated.
Figure **5E** shows some of the steps that may be executed to complete the timing-based control execution order for wireless input signal to the key fob based on the precise location of the driver's device and time point determined by the e-Key module.
Figures **6A to 6M** present schematic representations of various interfaces, functions and display layouts one of the possible embodiments of the control interface (e.g., smartphone e-Key App) for the proposed device; and
Figure **7** presents a flowchart of one embodiment of a remote engine start protocol of the e-Key module.

### Detailed Description

Unless the context requires otherwise, throughout the specification and claims which follow, the word "comprise" and variations thereof, such as, "comprises" and "comprising" are to be construed in an open, inclusive sense, that is as "including, but not limited to."

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content clearly dictates otherwise. It should also be noted that the term "or" is generally employed in its sense including "and/or" unless the content clearly dictates otherwise.

From the foregoing it will be appreciated that, although specific embodiments have been described herein for purposes of illustration, various modifications may be made without deviating from the spirit and scope of the teachings. Accordingly, the claims are not limited by the disclosed embodiments.

The following is a detailed description of embodiments of the disclosure depicted in the accompanying drawings. The embodiments are in such detail as to clearly communicate the disclosure without limiting the anticipated variations of the possible embodiments and may encompass all modifications, equivalents, combinations and alternatives falling within the spirit and scope of the present disclosure. It will be appreciated by those skilled in the art that well-known methods, procedures, physical processes and components may not have been described in detail in the following so as not to obscure the specific details of the disclosed invention.

As known in the art, smart keys can provide the convenience that no manipulation of the key may be necessary to operate the vehicle so long as the key is carried by the driver but they have their own limitation as having additional keys can be both expensive and complicated as they have to be ordered from the dealership and delivered from the car manufacturer which requires a longer period.

This may be more concerning when multiple drivers want to use the same vehicle and need their own independent keys. For example, if a vehicle is to be used for car-sharing proposes, the vehicle PKES system may have to be altered or changed so that multiple users can use the vehicle without requiring additional fobs for each user. Some examples of such systems may use an electronic card to authorize the use of the vehicle. This application provides a solution to this problem by providing access to the vehicle using one key fob to authorize multiple drivers using a computing device such as a smartphone.

Furthermore, when multiple users each have a smart key fob, it provides each user with unlimited access to the vehicle that may not be desirable in some cases. The present disclosure further provides a method, system and device which can provide conditional, limited or full access to one or more users either through a computing device or through an application working on the computing device.

In this application OEM refers to Original Equipment Manufacturer. The OEM is the original producer of a vehicle's components.

In the present document, a driver's device **10** (providing the user with an alternative to conventional key fobs), also herein referred to as the authorized driver's device or simply driver's device, can be any suitable state-of-the-art device that can be used as a controller to the proposed e-Key module/system **100** (i.e., embedded key fob vehicle control system) and may be used as an alternative to conventional key fobs. In one non-limiting embodiment, the driver's device can work as a virtual key of the vehicle allowing the driver to use it as a regular key fob. Preferably, the driver's device can be any device capable of wireless exchange of information and that can be used as an identifier of the authorized device. The driver's device can be, but may not be limited to, a Bluetooth^{®} (BLE) device, a near-field communication (NFC) device, a device using ultra-wide-band (UWB), a Sub-GHz communication device, a computing device, a smartphone, a smartwatch, e-glasses, an electronic chip connected to a transceiver, etc.

The e-Key (embedded key fob vehicle control) methods, systems and devices proposed herein provide improvements to the state-of-the-art embedded key fob systems (e.g., virtual key vehicle control system, also known as *key-in-box*), that can be used to significantly simplify implementation, installation and reliability of the KIB systems.

Note that, in the present document, the embedded key fob, which is used by the e-key module refers to the key fob that is located stored, secured, hidden, locked, fixed inside the vehicle, or a combination thereof. Therefore, the term "embedded" key fob is not used to restrict it to a specific way the key fob is being stored, but is used more generally to indicate that it remains located inside the vehicle (e.g., inside a dedicated storage unit) or, preferably, inside the e-Key module (e.g., in a secure box) and is not to be used as a conventional key fob by the driver/user.

In some systems, the PKES sends a wireless challenge communication to the key fob over the antennas and waits for the key fob's response in a way that allows the PKES system to identify the location of the smart key, namely inside or outside of the vehicle **20.**

PKES systems may be used to determine or approximate the position of the key fob in order to execute a corresponding protocol (e.g., to satisfy a request, execute a command, etc.) according to the determined location of the key fob. In some cases, the position of the key fob can be determined using various state-of-the-art software (algorithms and/or protocol) and hardware. One common way to determine the position of the key fob is to receive information about or determine characteristics of wireless signals between the PKES antennas and the key fob. For example, the characteristic of the signal can be a wireless communication intensity/strength.

Some systems use a directional antenna in the smart key fob to detect the position of the key with respect to the antennas, with the direction information received at the key fob being sent back to the PKES in its response.

It will be appreciated that some PKES protocol can require the key fob to be located nearest the known location of the request switched being triggered. In other words, the PKES may satisfy a request that originated from a request switch only if the position of the key fob is determined to be closer to the corresponding antenna than any other antenna.

One embodiment of the proposed e-Key module, device or apparatus does not have any receiver (e.g., a receiving antenna) connected to the key fob stored within the module, thereby allowing only wireless output communications and avoiding any remote and unauthorized use of the e-Key module and more specifically of its integrated key fob. In one embodiment, the e-Key module relies uniquely on wired connections with the PKES system and its components.

In the present document, the mention of wired connections or wiring of the e-Key module (or its key fob or control circuit) to any of the antennas or any of the request switches of the PKES system can include any physical connection on any part of the physical connection directly onto the antenna or switch itself, directly onto the PKES controller or onto any part of a physical connection (e.g., wiring or connection to a common communication BUS) therebetween. Therefore, when the contexts allow for it, the mention of connection or communication between the e-Key module **200** to an antenna or a request switch is established through such physical wired connection or wiring. It will be appreciated that, in the present document, the term electric connection or wired connection or electronic wiring exclude remote/wireless communications.

Note that, in the present document, the connection i) can be a physical connection comprising a splicing connection to electronic components or wires or ii) can be a non-intrusive connection (without physically tapping or cutting into the electronic components or wires). Non-intrusive connection can include various contactless signal monitoring components or devices: e.g., an electronic clamp-on sensor/probe (current clamp sensor, clamp meter, etc.), a Hall effect sensor, a Rogowski coil, an inductive pickup, a capacitive pickup, other similar elements or equivalents thereof.

One of the preferred embodiments of the proposed e-Key module **200** relies on logically and selectively connecting its integrated key fob **201** to one or more of the detectors (e.g., antennas) of the PKES system in order to control the reading/detection of the PKES system, thereby tricking it into believing that the key fob is at a desired position around or inside the car. It will be appreciated that, as the protocol of PKES systems may vary from one car manufacturer or model to another, the exemplary methods and devices detailed herein may not be limited to the particular embodiments described since they can be adapted to match most PKES systems and protocols once adapted accordingly.

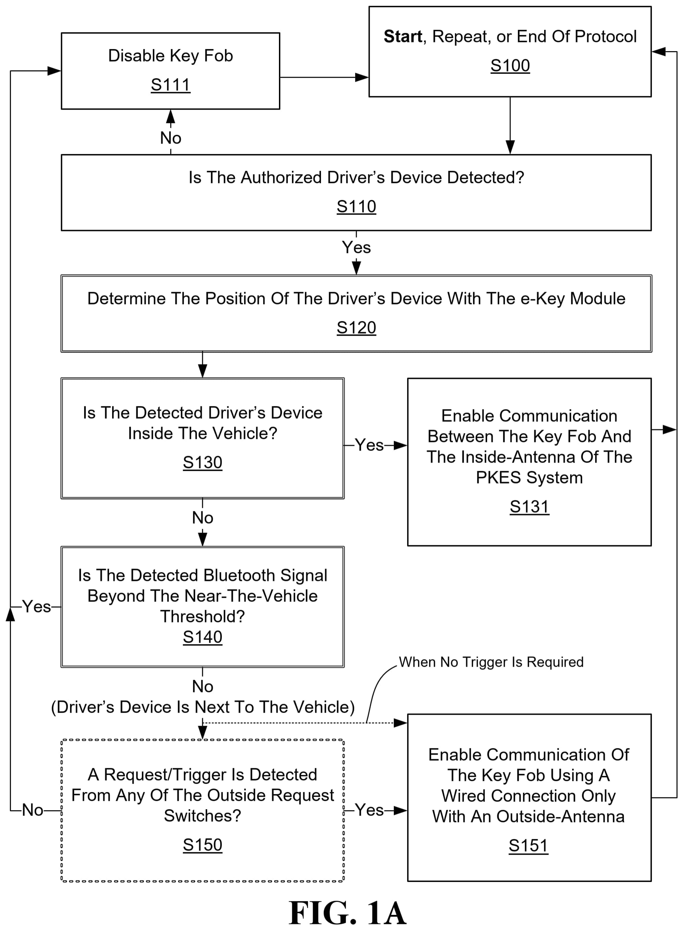

Figure **1A** presents a flowchart of one embodiment of the proposed method for using, driving and controlling the proposed KIB device, hereafter referred to as the e-Key module **200,** in a regular mode of operation (e.g., after completing a calibration and/or pairing mode of operation, which may be based on or similar to the state-of-the art). The purpose of the method is to ensure that the e-Key module works properly and that it provides a functional or optimal driver's device, i.e., driver's device (e.g., virtual key fob). To do so, the e-Key module may
i) determine the position (e.g., absent, inside the vehicle, outside the vehicle and near enough from the vehicle, or too far away from the vehicle) of the authorized driver's device (e.g., smartphone) relative to the vehicle, and
ii) control the exchange of information between its embedded key fob **201** and the PKES controller **277** in order to force a desired response/function from the vehicle's PKES system. Essentially, the e-Key module can control (e.g., switching or modulating) the communication between the PKES system **220** and the key fob **201** so that the information comprised in the response(s) from the key fob results in the PKES system determining that the key fob is located at the desired "artificial" location (e.g., the location of the driver's device determined by the e-Key module **200** and/or near the prompt source), thereby resulting in the PKES system performing all of its native functions based on the "artificial" location of the key fob. In other words, the methods proposed herein result in PKES system executing the desired functions by selectively controlling and limiting the exchange of information (e.g., communication, messages, beacons, etc.) between the embedded key fob and the PKES system. In one of the preferred embodiments, the control of the communications from the PKES system to the key fob is automatically performed by the proposed e-Key system results in the PKES system automatically/voluntarily performing its native functions as if it had detected an authorized key fob near the determined position of the driver's device.

It will be appreciated that, while the exemplary embodiment presented in Figure **1A** recites components or actions specific to one of the possible embodiments for clarity and simplicity of the flowchart, the method may be any functional alternatives captured by the scope of the present disclosure.

It will be appreciated that the proposed control can use various signal control methods to ensure the desired communications inputs form reaching or be transmitted to the key fob of the e-Key module and may be implemented in various ways. In the present document, when referring to the control of the signals/communications (i.e., wired or wireless) between the PKES system **220** (e.g., its antennas) and the key fob **201** of the e-Key module **200** secured inside the vehicle, it will be understood that the signals (e.g., wireless or wired) can be controlled in a binary fashion (i.e., connected or completely disconnected), a modulation (i.e., attenuating/reducing signal strength or amplifying/increasing signal strength), or the control can utilize a combination thereof. Some of the possible implementations of the proposed control will be described in more detail in the following document.

It will be appreciated that, in the present document, when referring to switches (e.g., from the control circuit **204**) for controlling the signals to the input (e.g., input receiver/antenna **211**) of the key fob **201,** the control switches can be used for binary control (i.e., connecting vs. disconnecting), modulation control or combination thereof. For example, the modulation control can be provided through switching to a further signal modulation module or circuit that may attenuate and/or amplify the signal passing therethrough.

In one embodiment, the e-Key module **200** can selectively enable the reception/input of information by/over wired connections only. For example, the detection/communication/transmission of a challenge communication from the PKES system (e.g., from the PKES controller or inside-antenna or outside-antenna) is provided using electronic wiring between the key fob of the e-Key module and the PKES system (e.g., its antenna wired connections). In some cases, the inputs of the key fob that are normally dedicated to receiving challenge communications over low-frequency (LF) wireless signals and that are normally connected to an LF receiver may be disconnected from any receiver antenna and/or may be directly wired/connected to electronic wiring of the PKES system associated with antennas (e.g., an LF inside-antenna and LF outside antennas).

The methods and apparatuses detailed in the present document may be used to selectively control which of the wired connections is used at any given moments based on circumstantial parameters/criteria (e.g., the position of the driver's device relative to the vehicle). The selective connection may be used to detect and send to the key fob a challenge communication (e.g., LF challenge communication intended for an antenna of the PKES system) from the PKES controller.

In some embodiments, the key fob of the e-Key module may be provided with a wireless transmitter (e.g., ultra-high frequency (UHF) antenna **2001**). In one embodiment, an output (e.g., the response communication output) of the key fob remains connected to its native UHF antenna or is provided and connected to any suitable wireless transmitter compatible with the PKES system of the chosen vehicle.

In one embodiment, the e-Key module **200** enables the reception of information from only one antenna of the PKES system (or one antenna output of the PKES controller) at a time by its key fob **201,** such that, when the key fob **201** receives any challenge signal therefrom, the key fob selects or generates the appropriate/a corresponding/matching response communication and sends it as a wireless signal over its UHF antenna that can be received by the PKES system.

For some vehicle models or manufacturers, tricking the PKES in detecting the driver's device outside vs. inside the vehicle may be enough to control some of the essential functions of the PKES system and to provide the user with a functional e-Key experience (use of the driver's device like a native key fob). In other embodiments, the PKES system can require the perceived/determined position of the key fob to match the location of the request switch from which the request to the PKES system originates.

After initiation of the protocol (step **S100**), the e-Key module can complete step **S110** of detecting a driver's device **10** within its wireless transceiver **202.** This detecting step **S110** can comprise, but may not be limited to, one or more of:
i) searching for and detect compatible wireless communication enabled devices (e.g., wireless transceivers or Bluetooth^{®} devices or UWB devices);
ii) verifying compatibility and/or credentials to determine if the detected device is an allowed/authorized device;
iii) remotely connecting to the detected compatible device, and
iv) communicating and exchanging information/signals therebetween.

In some embodiments, the e-Key module can connect with any suitable type of driver's device (preferably only with registered and/or pre-authorized driver's device) by means of wireless signals/communications (e.g., using its wireless transceiver **202**).

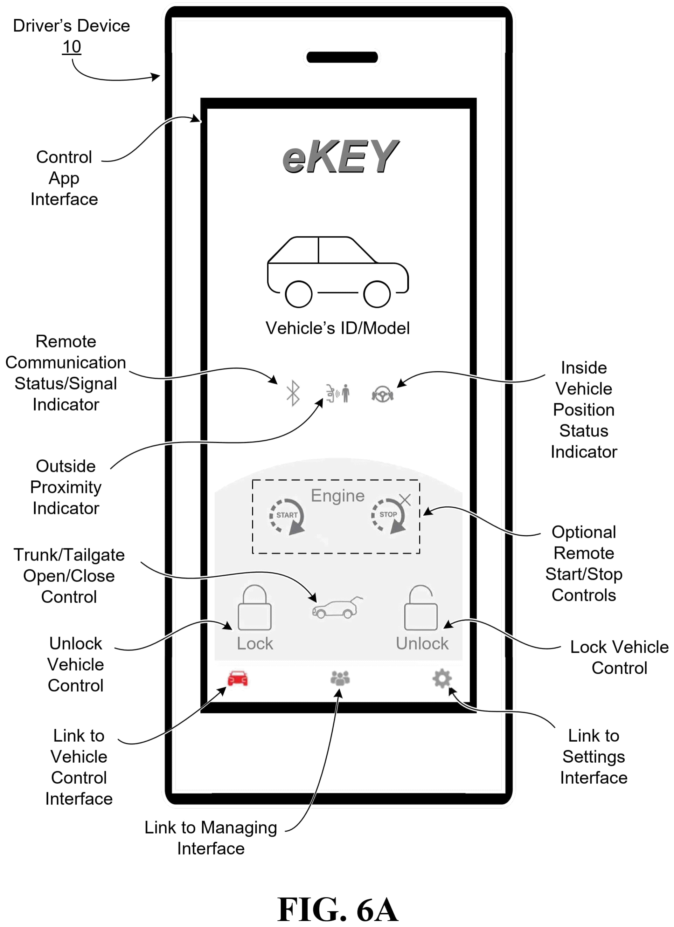

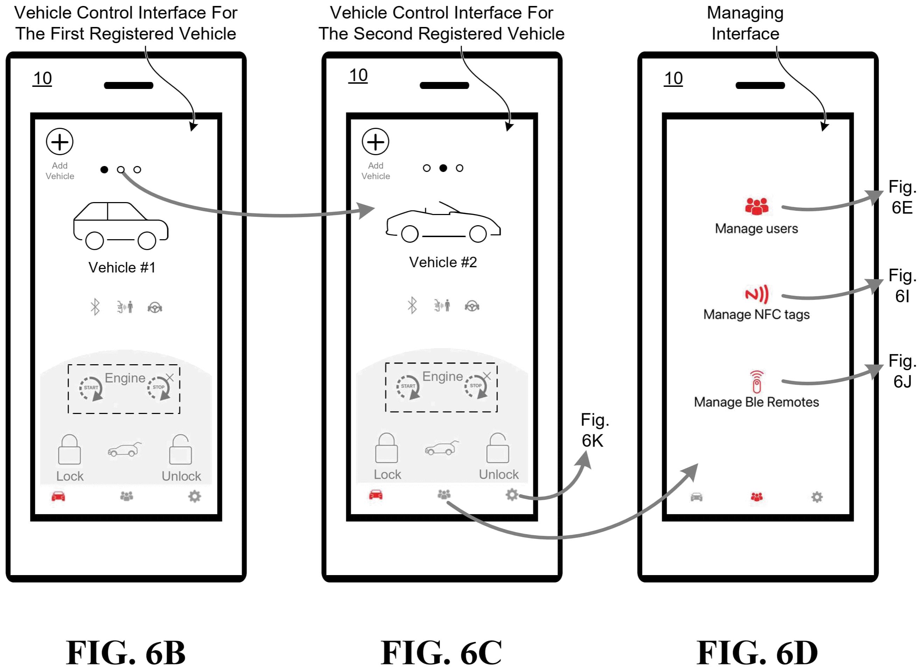

In the preferred embodiments, however, the e-Key module **200** only remotely (wirelessly) connects with new, unknown and unauthorized driver's devices to register/enroll a new driver's device (e.g., adding a driver's device to the authorized/known list). In one embodiment, the registering may be enabled when a specific mode of operation (e.g., pairing mode) is activated. A paring mode may be manually (e.g., using a button) or wirelessly (e.g., using an authorized or master e-Key application) activated and locally or remotely (e.g., over internet or phone network) activated. In some embodiments, the driver's device may be authorized using various embodiments of a smartphone control application (see Figures **6A to 6M**).

It will be appreciated that a driver's device may be registered with and authorized to operate a given vehicle for a temporary, indeterminate or permanent period of time. A temporary authorization, which may be valid for any desired period of time (e.g., only for today) or frequency (e.g., over weekends only), can be particularly useful when sharing the vehicle with family members, friends or even valets for limited or specific periods of time.

The operation mode for adding/registering a new driver's device may require various access or authentication requirements, which may be the same as or similar to, without being limited to, the various conditions of use known in the art (e.g., the driver conditions described in the WIPO publication WO 2023/168512).

In one embodiment, the wireless transceiver **202** of the e-Key module **200** and the wireless transceiver **12** of the driver's device **10** are Bluetooth^{®} and/or UWB transceivers, and step **S110** relies on one or more Bluetooth^{®} and/or UWB protocols to only recognize, detect and connect with known/authorized devices (i.e., previously paired and authorized driver's devices or operator/installer device).

Step **S110** may be completed at discrete intervals (e.g., to save battery power) or "continuously" (e.g., for faster response from the system).

It will be appreciated that, in some embodiments, any driver's device (e.g., unknown device) may be wirelessly connectable to the e-Key module **200** during the "normal" mode of operation and may later be authenticated to validate that it is an authorized driver's device.

In one embodiment, authorized driver's devices or specific operators (e.g., the provider of the e-Key module) can be used to initiate a pairing mode to add an additional driver's device to the e-Key module's list of recognized/authorized devices.

If no driver's device **10** is detected, until one is detected or when wireless connection with the driver's device is interrupted/lost, the e-Key module **200** may execute step **S111,** other similar steps or equivalents thereof, which comprises ensuring that any connection to or any exchange of information with the key fob is disabled or ensures that the key fob **201** itself is disabled (e.g., powered off). This can result in the PKES system not detecting the key fob and thereby shutting down or dismissing any request that requires the presence of the key fob.

In some of the proposed embodiments, the e-Key module **200** maintains the key fob isolated (e.g., disconnected) from the PKES system **220** by default to prevent any unintended use and any malfunctioning that could enable any undesired/uncontrolled function from PKES.

Once a driver's device **10** has been detected and is connected to the e-Key module **200** (i.e., once step **S110** is completed successfully), step **S120** may be executed by the analyzer **203** in order to determine the position of the driver's device **10** relative to the vehicle **20.** The e-Key module **200** can be configured to determine an approximative and accurate position of the driver's device using a previously established wireless communication. In one embodiment the e-Key module **200** can use its wireless transceiver **202** (e.g., Bluetooth^{®} and/or UWB module) to exchange information with the wireless transceiver of the driver's device. The e-Key module can determine the position of the driver's device **10** based on the information received therefrom or based on characteristics (e.g., the quality of the signal, signal strength, ping, etc.) of the signals received therefrom. In one embodiment, the strength of the signal can be used by the analyzer **203** to determine the position of the driver's device, wherein the strongest received signal may be correlated with the presence of the driver's device being inside the vehicle. In one embodiment, determining the distance of the driver's device from the wireless transceiver **202** of the e-Key module **200** may be sufficient to determine the relative position of the driver's device. In one embodiment, the analyzer can determine the relative distance of the driver's device by processing and analyzing at least one characteristic of the signals exchanged with or received from the driver's device, for example, using a single wireless transceiver **202** and the signal strength of the received signals or the variation of signal strength over time. Another alternative may be to use at least a pair of wireless transceivers **202** to enable triangulation of the driver's device to determine its relative position.

Each driver's device can be equipped with a different wireless transceiver having specific signal characteristics (e.g., a specific maximum or average signal strength and/or a specific change of signal strength over distance variations) and wireless signals from outside the vehicle passing through the vehicle's enclosure may be affected (e.g., dampened) differently by each vehicle model.

It will therefore be appreciated that a calibration protocol and various calibrations steps may or may not be necessary for each newly added authorized driver's device to allow accurately determining of its relative position relative to the e-Key module located inside the vehicle. For example, when adding an additional drive's device and during calibration, the user may be instructed (e.g., via instructions displayed on the e-Key App) to position himself next to the driver's door, the passenger's door, in front of the vehicle and/or behind the vehicle and to gradually (e.g., stop and go) move away from their initial location.

The calibration (e.g., adjusting of the various distances and/or signal strength thresholds) may be automatic or manual (e.g., via the control app). See Figure 6A for an example of manual calibration.

In some embodiments, the calibration may be completed using information specific to a model of the driver's device. For example, the control app may fetch information about the model of the host driver's device (smartphone) or of its transceiver.

A step **S130** of determining whether the driver's device is positioned inside the vehicle's enclosure (e.g., by determining if the strength of the wireless signals received by the driver's device is greater than an *inside-position-threshold*) can be completed.

Step **S130** may not be strictly limited to determining whether or not the driver's device is "inside" the vehicle. It will be appreciated that step **S130** can be replaced by any equivalent alternative steps. For example, it could be replaced by an alternative step which would determine that the driver's device is located outside the near-the-vehicle threshold.

When it is determined that the driver's device is located inside the vehicle, step **S131** may be completed to enable communication between the e-Key module **200** inside the vehicle and the PKES system **220,** which may be achieved by allowing communication between the key fob **201** of the e-Key module **200** and the inside-antenna **221** (i.e., internal antenna) of the PKES system **220.** This results in the PKES system detecting the key fob inside the vehicle. In one embodiment, the above communication is established by closing, with the control circuit **204,** a switch **S1'** on a wired connection between the antenna input of the key fob and the inside-antenna input/output of the PKES system **220.** Communication may be maintained as long as the position of the driver's device is determined to be inside the vehicle.

It will be appreciated that, in the present document, a connection to an antenna of the PKES system can be replaced by, and may be equivalent to, a direct connection (e.g., via splicing of a T-connector) to the input/output **266** of the PKES controller **277** of the PKES system **220.**

A step **S140** can be completed to determine whether the driver's device **10** is positioned unreasonably far from the vehicle (e.g., outside a *near-the-vehicle* threshold around the vehicle **20**) to be considered as being near the vehicle. In other words, step **S140** determines if the driver's device **10** is further away than allowed by safety measures, for example, to prevent an unauthorized person from accessing the vehicle when the driver's device **10** is too (unreasonably) far away from the vehicle **20** even if the wireless connection between the driver's device **10** and the e-Key module **200** is maintained (e.g., when walking away from the vehicle). In one embodiment, it may be determined that the driver's device **10** is positioned outside the allowed region outside the vehicle **20** (e.g., further away than the allowed/reasonable distance from the vehicle) when the strength of the wireless signals received by the driver's device is smaller than a *near-the-vehicle* threshold.

A near-the-vehicle threshold can define the parameter (e.g., distance from the vehicle or from the transceiver **202** of the e-Key module or a radius around the vehicle) used to determine that the deriver's device is positioned at an acceptable, reasonable and safe distance from the vehicle, thereby ensuring that a prompt interaction with the vehicle (e.g., triggering of a request switch) originates from the driver's device holder. It will be appreciated that the near-the-vehicle threshold may be automatically defined or may be selectively adjusted by the user of the driver's device.

When it is determined that the driver's device is located outside the safety region/radius, the e-Key module **200** can execute step **S111** to disconnect or disable the key fob **201** to prevent communications with the PKES system **220.**

Step **S140** may not be strictly limited to determining whether or not the driver's device is "beyond" or outside the near-the-vehicle threshold. It will be appreciated that step **S140** can be replaced by any equivalent alternative steps. For example, it could be replaced by an alternative step which would determine that the driver's device is located within/inside the near-the-vehicle threshold instead of beyond it. Such that, when the conditions are such that the driver's device was previously determined in step **S130** to be outside the vehicle and is then determined in the alternative step **S140** to be within the near-the-vehicle threshold, step **S150** can be executed. Otherwise, step **S111** can be completed.

In some embodiments, for all intents and purposes when the driver's device is determined to be located outside the outer limit, it may be considered as being absent or vise versa.

In one embodiment, when the determined position of the driver's device changes from being outside and within the near-the-vehicle threshold to being outside the near-the-vehicle threshold, the e-Key module may be configured to automatically have the PKES system lock the vehicle if the user desires (e.g., if the option is enabled in the App).

In embodiments where there are M possible positions considered by the e-Key module **200,** it will be appreciated that the analyzer **203** may be configured to determine parameters/criteria for M-1 positions of the driver's device **10** and to deduce the last position by simple elimination process. For example, if the driver's device is detected and is determined to be not inside (i.e., outside) the inside-position-threshold and is not outside (i.e., inside) the near-the-vehicle threshold, the analyzer **203** may conclude that the position of the driver's device can be defaulted to the reasonable outside position.

Determining whether the driver's device is positioned at an allowed/reasonable outside position (e.g., outside the vehicle but within a near distance) may be achieved using the strength of the wireless signals received from the driver's device (e.g., if it is greater than an inside-position-threshold and smaller than the near-the-vehicle threshold) can be completed. In other words, if step **S150** of the flowchart of Figure **1A** is reached, the driver's device is positioned at a near outside position.

When it is determined that the driver's device is positioned at a reasonable outside position (e.g., within the near-the-vehicle threshold), the e-Key module **200** executes step **S150,** which may comprise monitoring the at least one outside request switches (e.g., a driver's door outside request switch or sensor **232,** a front passenger's door outside request switch or sensor **233,** a trunk or tailgate outside request switch or sensor **234,** etc., or a combination thereof) to detect any signal (e.g., activation, request, triggering, etc.) these switches.

Once a prompt (i.e., a request signal from any of the outside request switches) or a challenge communication from the PKES system is detected by the e-Key module **200** (e.g., by the control circuit **204** of the e-Key module **200**), step **S151** can be completed to enable communication with one of the outside-antennas **207** (i.e., external antennas) of the PKES system **220** or, in an equivalent way, the corresponding inside-antenna input/output of the PKES controller **277.** In a preferred embodiment, the selected and connected outside-antenna can preferably be the outside-antenna corresponding (e.g., closest to) the outside request switch **207** being triggered. In one embodiment, the e-Key module **200** enables this communication by connecting the key fob **201** to the selected outside-antenna **221** of the PKES system **220** (e.g., by controlling at least one connection therebetween).

Step **S151** may require that communication between the selected outside-antenna to be maintained over a minimum connection period that can allow the PKES system to complete its detection protocol (e.g., its passive low-frequency detection protocols, also known as challenge-response protocol) to ensure that the PKES system has the time to detect the key fob at the selected/desired location. This can imply that the connection/communication between the antenna of the key fob **201** of the e-Key module **200** may be maintained even after the request switch has been released to respect this minimum connection period (e.g., by delaying the disconnection). This minimum time period may be predetermined or adjusted based on a vehicle model (e.g., based on its specific PKES system and/or the timing of its various challenge-response protocols) or may be defined so as to be compatible with (long enough for) each model. It will be appreciated that the minimum connection period may be provided by circuitry (e.g., using a dedicated time delay circuit - not shown -) or may be programmed in software. Evidently, the connection may be disabled following this minimum time delay.

In one of the preferred embodiments of step **S151,** the control circuit **204** can selectively connect the key fob **201** to one of the outside-antennas **207** at least based on the location of the outside request switches **206** from which the request signal originated. Therefore, when the PKES controller **277** executes the required protocol, it is tricked into detecting the key fob at/near the connected antenna. Some PKES systems determine the positions of the key fob based on the strongest signal received by any of the antennas. In such cases, when only one of the antennas detects a response signal from the key fob **201,** due to the selected connection of the control circuit **204** of the e-Key module **200**, the PKES system detects the strongest signal at the connected antenna and that the key fob must be located there.

The selective connection function (e.g., steps **S130** and **S131** or steps **S140** and **S141**) may be provided by a digital implementation which can actively monitor for any trigger signal from any of the outside request switches, take a decision and control the connection to the key fob accordingly; provided by an analog implementation relying on logic circuitry that automatically controls switches for connecting one antenna to the key fob when an outside trigger is received; or provided by any equivalent combination thereof.

In one embodiment, the above communication is established by closing, with the control circuit **204,** a selected switch (**S2, S3, S4,** etc., **SN**) on a wired connection between the antenna input of the key fob **201** and the selected corresponding outside-antenna input/output **266** of the PKES controller **277.** In one embodiment, the key fob is connected to an outside-antenna of the PKES system in response to a prompt (e.g., the triggering of an outside request switch) when the position of the driver is determined to be outside the vehicle within a near/allowed/reasonable distance (e.g., within a near-the-vehicle threshold).

It will be appreciated that, when the PKES system of the vehicle requires the key fob to be positioned nearest the location of the request switch from which the request signal/command originates, the e-Key module can comprise a plurality of connections (e.g., individual connections) to a plurality of (e.g., each) outside-antennas **207** and outside request switches **206** of the PKES system **220.** Such embodiments can allow, in response to detecting the request, for the control circuit **204** to selectively connect the key fob **201** to the outside-antenna corresponding (e.g., closest) to the location of the request switch **206** from which the request signal/command has been detected.

While the wired connections to the request switches are described above as being used mainly for detecting prompt signal (i.e., trigger signal) from a prompt source (e.g., from one of the request switches **206**) for triggering the PKES system, it will be appreciated that the same connection may be alternatively or additionally used to send triggering signal thereon to trigger the PKES system using the e-Key module **200** by simulating/emulating the triggering signal from the corresponding request switch. Sending a signal to the PKES system through the wiring between a request switch and the PKES controller may allow for additional features and control from the e-Key module. For example, in response to receiving a command (e.g., for locking the vehicle) from the driver's device, the e-Key module may send (if it determines it is appropriate, allowed and/or coherent with the determined position of the driver's device) a trigger signal onto the connection to a request switch, thereby tricking the PKES controller in thinking it received the trigger signal from the request switch, thereby triggering the locking protocol of the PKES system.

In one embodiment, the detection of the request/trigger signal may not be required (e.g., when the e-Key module only comprises a connection to only one outside-antenna) step **S150** may not be required and can be skipped by automatically connecting the key fob **201** to the outside-antenna.

In one possible embodiment of the e-Key module **200** that comprises a connection to a single outside-antenna **207,** the e-Key module may be configured to response to the detection of some outside requests by using connections to the various outside request switches **206** and this only connection to the one outside-antenna **207** by:
1) firstly, disconnecting the key fob **201** from antennas;
2) secondly, waiting for a first protocol from the PKES system to be completed, thereby leading to a denying of the initial request due to a perceived absence of the key fob;
3) immediately followed by having the e-Key module connect the key fob to the one outside-antenna **207** and simulating a triggering (e.g., request) of the outside request switch **206** that is associated with the only connected outside-antenna **207** (e.g., by regenerating and sending the trigger onto its connection therewith).
4) waiting for a second protocol from the PKES system to be completed, thereby resulting in the PKES system granting the second simulated request since the position of the key fob perceived by the PKES system will match the location of the request switch **206** perceived as having sent the second request.

Steps **S120, S130,** and **S140** can be completed by the analyzer **203** of the e-Key module 200.

Steps **S111, S131, S150** and **S151** can be completed by the control circuit **204** based on the results of steps **S120, S130** and **S140** (e.g., the outputs of the analyzer **203**).

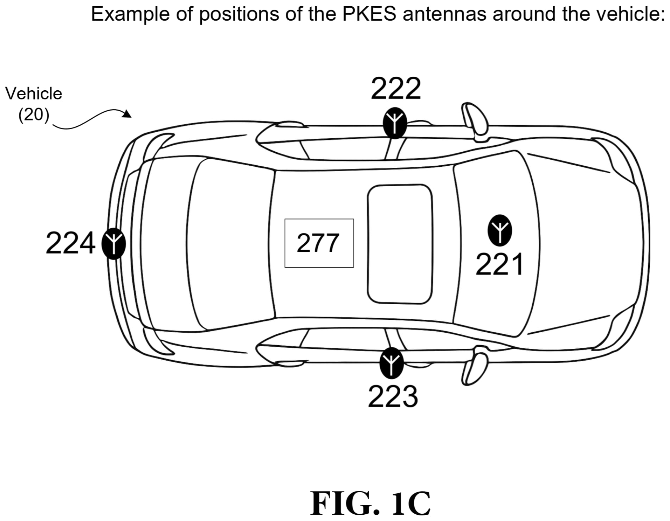

Figure **1C** presents an exemplary embodiment of a PKES system **220** comprising a PKES controller **277** located inside the vehicle **20** and a plurality of PKES antennas located around the vehicle. In one embodiment, the PKES system comprises at least one inside-antenna **221** and three outside antennas (i.e., a drive side antenna **222**, a passenger side antenna **223**, and a trunk antenna **224**) located around the vehicle **20.**

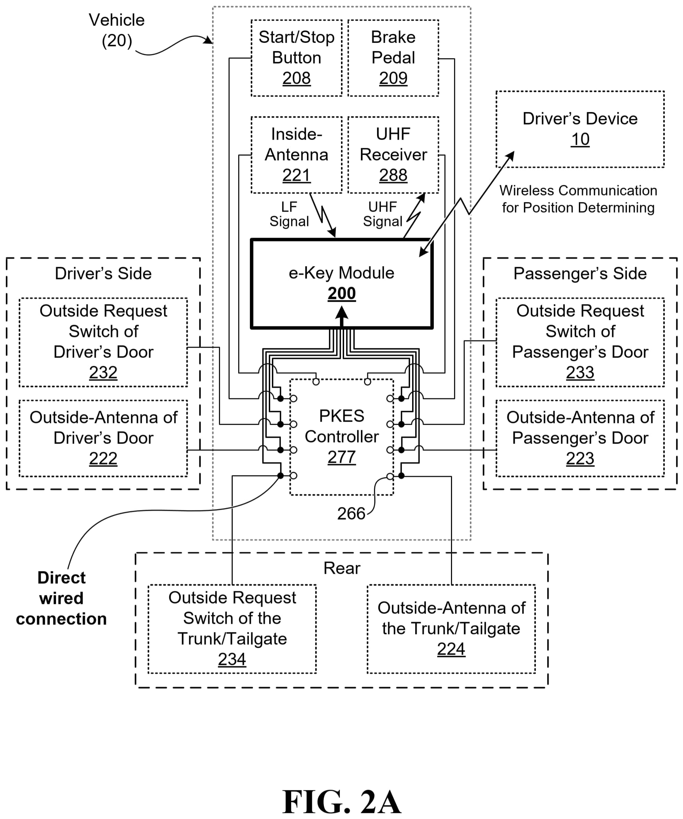

Figure **2A** schematically illustrates a conventional passive keyless entry and start (PKES) system **220** (see the blocks in dashed lines) also referred to as OEM security system comprising a PKES controller 277 located and secured inside the vehicle.

For access to the vehicle, a trigger may be required in some embodiments for the e-Key module **200** to know when to unlock the vehicle since the smartphone interface is not used for this purpose. For this purpose, there are a number of possible triggers that may be used for requesting any action from the PKES system (e.g., locking or unlocking of the vehicle).

Request switches may be any door handle (e.g., push buttons, keypad locks, automatic door openers), door button (e.g., door lock button, door unlock button, etc.), door sensors (e.g., touch sensors, proximity sensors, motion sensors, etc.), any type of outside door access switch known in the art, or a combination thereof.

Some request switches of the PKES system **220** may be located outside of the vehicle **20.** In some cases the PKES system **220** may comprise one or more of a driver's door outside request switch **232,** a front passenger's door outside request switch **233,** a trunk or tailgate outside request switch **234,** etc. The rear/trunk request switch **234** can be, but may not be limited to, any one of a trunk open button, a trunk close button, a trunk handle, a trunk's close-and-lock button, a trunk kick sensor, or a combination thereof. Other request switches may be located inside the vehicle, such as a start/stop button **208,** brake pedal **209,** etc.

The PKES systems **220** may comprise a UHF receiver **288** (or transceiver), which may be connected and used by the PKES controller **277** to receive a UHF response communication from any Key fob. The embedded key fob **201** of the e-Key module **200** and its UHF transmitter **2001** (or transceiver) can be used to communicate with the PKES system **220** through the UHF receiver **288.** In the preferred embodiments, the response communication of the key fob **201** is sent, as a UHF signal and in response to the challenge communication picked up using electronic wiring, to the UHF antenna **288** of the PKES system **220.**

The PKES systems **220** may comprise request switches located inside the vehicle **20,** which may comprise various prompt sources, such as an engine start/stop (engine-start-or-stop) connections or triggers (e.g., a combination of the Start/Stop button **208** and of the brake pedal connection/wire **209),** etc.

The PKES system may comprise a plurality (e.g., constellation) of antennas (e.g., low frequency (LF) and/or high frequency (HF)). Some models of vehicles may comprise one or more antennas corresponding to (e.g., around, near or next to) one up to each one of the request switches of the PKES system.

In some embodiments, the antennas may be located on the outside of the vehicle as well as inside the vehicle. The PKES system can comprise various outside-antennas **207** that can be, but may not be limited to, one driver-outside-antenna **222** located near/around the driver's door, one passenger-outside-antenna **223** located near/around the front passenger's door, and one or more trunk-outside-antenna **224** located near/around at the rear of the vehicle (near the trunk). In some embodiments, the PKES system may comprise one or more inside-antennas **221** located inside the vehicle.

It must be noted that while reference is made through the present document to various outside-antennas **207** to differentiate them from the antennas primarily used to determine that the key fob is located inside the vehicle (i.e., inside-antenna **221**), the use of the term "outside" is not a strict indicative of its physical location relative to the vehicle's body and should not be used to limit the interpretation of what constitutes an outside-antennas to being outside the vehicle. For example, in some embodiments, the outside-antennas may be located outside the vehicle's body, located/embedded inside the vehicle's body (e.g., between an outside surface and an inside surface of a door), or inside the vehicle.

The PKES controller **277** can authenticate the smart key fob using a security protocol as a way to ensure that the response communication(s) from the key fobs can be trusted to control access to the vehicle. Therefore, the e-Key module **200** may be configured to be compatible with the PKES system **220** (e.g., recognized by the PKES controller **277** as a trusted device). To do so, various means known in the state-of-the-art can be used (e.g., pair the e-Key module **200** with the PKES system **220**). For example, the e-Key module **200** can be provided with an unprogrammed key fob **201** (e.g., a manufacturer key fob and/or circuit board) that can be programmed (e.g., paired or linked) to the vehicle's PKES system **220,** which has the advantage of not using an existing key fob of the vehicle owner and does not require ordering additional key fobs. Alternatively, the e-Key module may be provided with the existing vehicle's key fob (e.g., its extracted chip and circuit board), which can be integrated within the e-Key module as the key fob **201.**

The PKES system **220** is typically a proprietary system specific to the vehicle manufacturer and is known to vary over time and with the vehicle model. The smart key location and authentication module can comprise software in the vehicle's computer controller. When any request switch is triggered (e.g., lock/unlock request, open trunk/tailgate request, engine start/stop request, etc.), the controller **277** of the PKES system **220** exchange (e.g., transmits and/or receive) at least one signal to the smart key fob using at least one antenna (e.g., a sequence of a plurality of antennas) inside and/or outside of the vehicle to authenticate the key fob.

In some cases, the PKES system **220** of the vehicle may not comprise any dedicated wired connection between its PKES controller **277** and the request switch **234,** which implies that there may not be any prompt/request signal from the trunk/tailgate for the e-Key module **200** to pick up on using a wired connection, such that the embodiment of Figure **1A** would not be suitable because the use and access of the trunk/tailgate of the vehicle would not be possible using the above steps **S150** and **S151.**

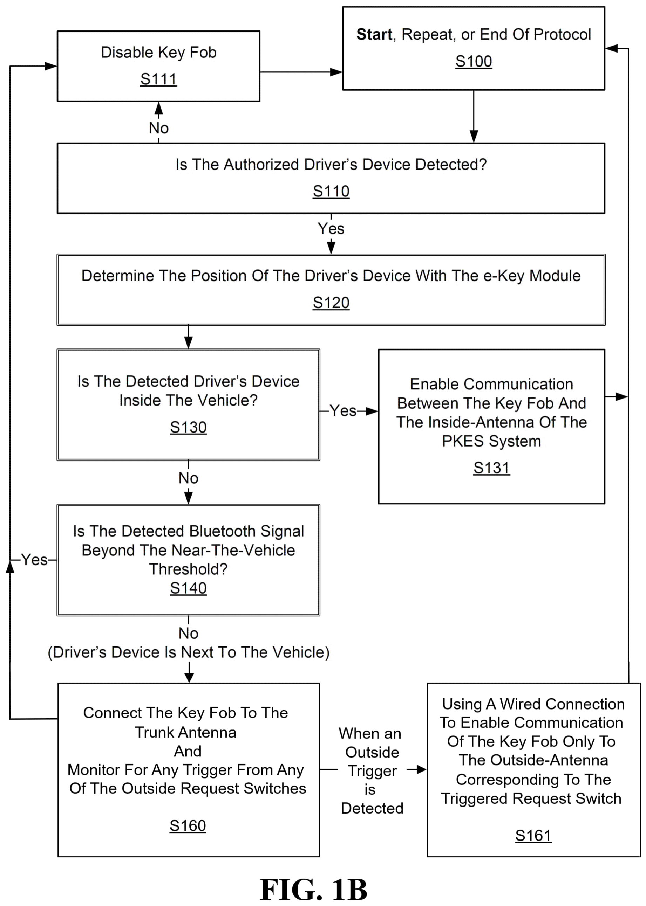

Therefore, in such cases, the alternative embodiment of the proposed method shown in Figure **1B** may be used to ensure proper use and access to the trunk/tailgate of the vehicle. In the embodiment of Figure **1B****,** while steps **S100** to **S140** are the same as previously described when referring to Figure **1A****,** step **S150** and **S151** are replaced by steps **S160** and **S161.**

Step **S160** may be automatically executed and/or activated once the driver's device is determined to be within the near-the-vehicle threshold while remaining outside the vehicle, which can result from a combination of step **S130** concluding that the driver's device **10** is not located inside the vehicle and of step **S140** concluding that the driver's device **10** is not located beyond the near-the-vehicle threshold.

Step **160** can comprise automatically connecting the key fob to the trunk outside-antenna **224.** This can allow the PKES system of the vehicle to perform its native functions. This way, when the e-Key module **200** does not detect any request signal from the other request switches the PKES system will be able to communicate with the key fob and will consider it as being located near the trunk of the vehicle. Therefore, if the PKES system detects any request from the trunk, which the e-Key module cannot detect in these embodiments, the PKES system will proceed with its wireless communication with the key fob through the trunk antenna that is automatically connected thereto as dictated by step **S160.** Thereby, the PKES system will detect (i.e., be tricked in detecting) the key fob as being located near the trunk and will perform the requested action as dictated by its native functions.

It will be appreciated that, in step **S160,** before or at the same time as the key fob is connected to the trunk antenna, the e-Key module enables the function of step **S161** that comprises automatically connecting the key fob to the outside-antenna corresponding to a detected/received trigger from any of the request switches.

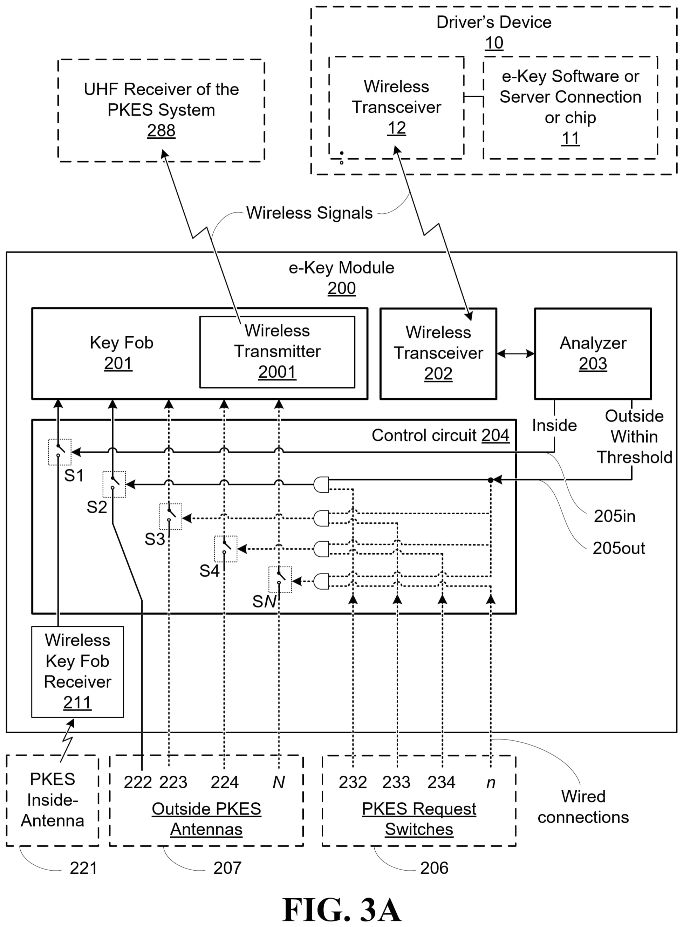

The selective connection functions of steps **S160** and **S161** that may rely on the combined use of the control unit/circuit **204** with the analyzer **203,** and optionally the receiver **210** (see Figures **3A** to **3D**). It will be appreciated that these selective connection functions may be (i) provided by a digital implementation which can actively monitor for any trigger signal from any of the outside request switches (here excluding a trunk request switch), take a decision and control the connection to the key fob accordingly; (ii) provided by an analog implementation relying on logic circuitry that automatically controls switches for connecting one antenna to the key fob when an outside trigger is received; or (iii) provided by any equivalent combination thereof. Evidently, in a preferred embodiment, the trunk antenna is disconnected from the key fob when connecting the key fob to an outside-antenna other than the trunk antenna. In one embodiment, when the driver's device is located outside and near enough to the vehicle (e.g., within the near-the-vehicle threshold), connection is maintained to the outside-antenna corresponding to prompt (request signal) only for a limited (e.g., short) period following reception of the prompt the allowing the key fob to complete all the required exchange of information (e.g., communications: ID transmissions, PKES challenges messages, key fob responses, etc.) with the PKES system before returning of the "default" connection to the trunk antenna **224** if the authorized driver's device is still outside and near the vehicle.

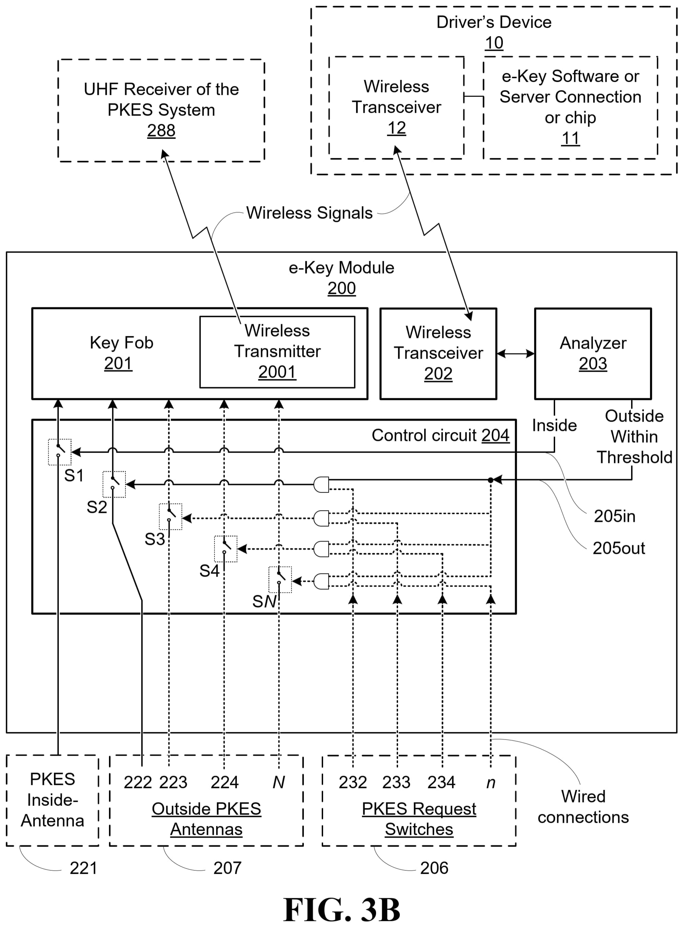

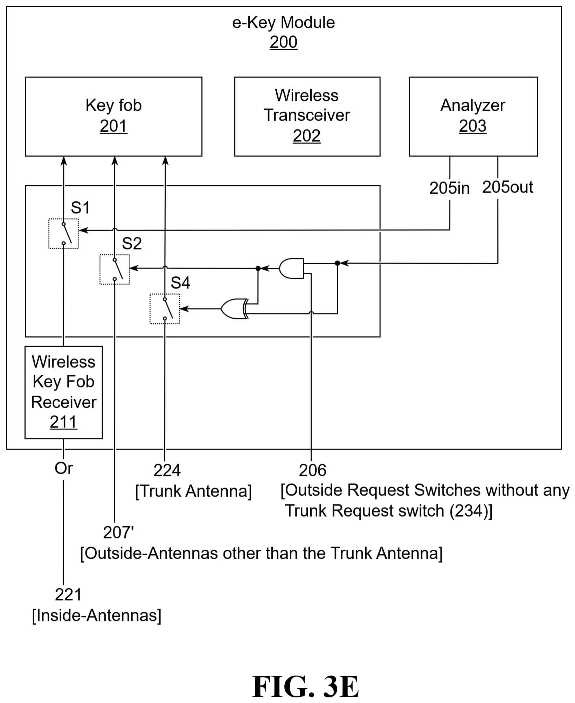

Various analog implementations of the control circuit **204** may be possible and suitable based on the embodiment and vehicle model. For example, with reference to Figure **3A****,** **3B** and **3E****,** step **S160** can include controlling the analyzer **203** of the e-Key module **200** by constantly sending a signal on the input **205out** of the control unit **204** (corresponding to a driver's device located outside the vehicle and within the near-the-vehicle threshold), such that step **S161** can be automatically completed by activating the proper AND gate of the control unit when a request signal is detected by any of the wired connections to the request switches **206.**

In the embodiment shown in Figure **3E****,** the control circuit **204** may be an logic circuit enabling the method of Figure **1B** (specially steps **S160** and **S161**) by automatically connecting the key fob to the outside-antenna of the trunk **224** when no prompt has been detected in the last (most recent) period and when the analyzer **203** sends the "outside-location" signal **205out** to the control circuit **204** to automatically connect the key fob to the trunk antenna **224.** The signal **205out** corresponds to the driver's device being detected outside the vehicle, but near enough to the vehicle. As illustrated in Figure **3E****,** in order for the trunk antenna **224** to automatically connect to the key fob **201** in a "default" setting and automatically disconnect when any one of the other outside-antennas **207** (other than the trunk outside-antenna) is connected to the key fob, the switch **S4** between the key fob **201** and the trunk antenna **224** may be responsive to an exclusive OR (XOR) gate having as an input the input **205out** and the output of the AND gates controlling the switches between the key fob and the other outside-antennas.

Figure **2A** further presents one embodiment of the proposed e-Key module **200** located inside the vehicle and shows some of the various possible connections with components of the PKES system **220.** In some embodiments, the e-Key module may minimally comprise one connection to one outside request switch **206,** one outside-antenna **207** of the PKES system **220** and one inside-antenna **221.** In one embodiment, the e-Key module **220** may be connected to various or all of the outside request switches, one outside-antenna **207,** and one inside-antenna **221.** It will be appreciated that the e-Key module **200** can comprise additional connections to various alternative or additional components of the PKES system **220** or the vehicle **20.**

It will be appreciated that the connections of the e-Key module **200** to the PKES system **220** may be varied in types, technology and hardware. While the state-of-the-art presents various wireless ways of connecting the e-Key module **100** to the PKES system, the preferred embodiment of the proposed e-Key module **200** relies on direct (e.g., wired) connections to the components of the PKES system or directly onto the controller unit/module of the PKES system.

The e-Key module **200** can have direct (e.g., wired) connections to the various components (e.g., antennas and request switches) of the PKES system or directly onto the inputs (e.g., signal inputs or components plugs) of the PKES controller **277.** In some embodiments, the e-Key module is connected to the connectors of the PKES controller **277,** its components (e.g., request switches and antennas) or the wires therebetween by means of a connection adapter, a T-shape (3-way) connector (i.e., T-connector), directly spliced onto, an intermediate connector, etc. In one embodiment, for installation purposes, the various connections of the PKES antennas and/or PKES request switches at the input/output connector(s) of the PKES controller **277** can easily be momentarily unplugged from the PKES controller **277** before being reconnected onto an intermediate e-Key module connector plugged into the inputs of the PKES controllers **277.**

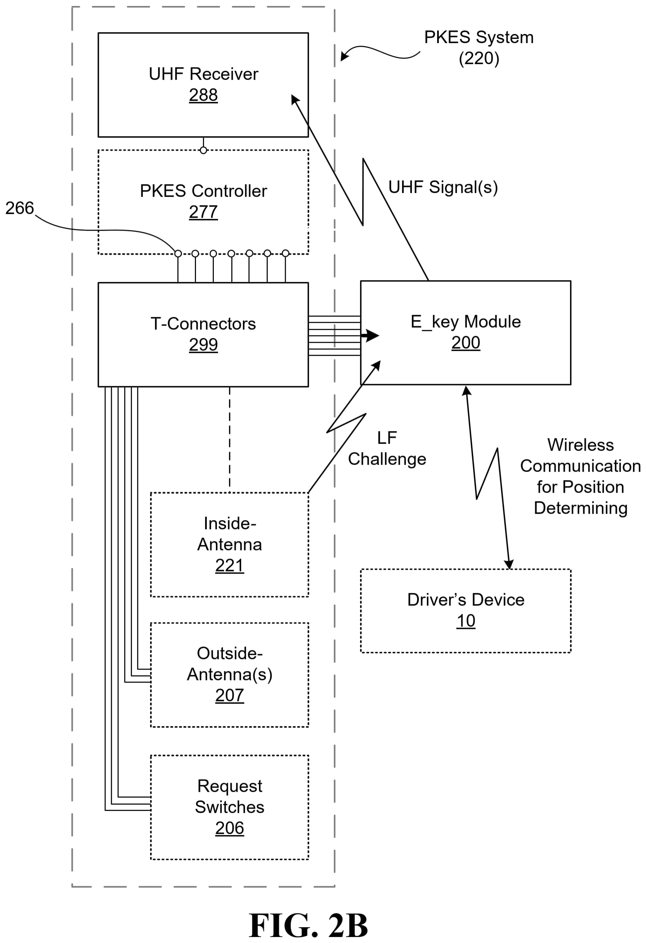

Figure **2B** shows one embodiment using a plurality of T-connectors **299** connected/installed between various PKES elements (e.g., inside-antenna **121,** outside-antennas **207,** request switches **206,** etc.) and the PKES controller **277.** Although the T-connectors **299** are illustrated as a single element (e.g., to illustrate one possible embodiment where some or all of the T-connectors **299** can be integrated within a common connector providing the plurality of T-connectors in parallel, for example with three interfaces each corresponding to one branch of the plurality of T-connectors and each comprising ***N*** connection/pin), it will be appreciated that the e-Key module may be connected to the PKES system **220** by means of individual T-connectors.

In a preferred embodiment, the T-connectors are directly connected into the inputs/outputs of the PKES controller **277.** For example, the native connectors of the PKES elements can simply be unplugged from the inputs/outputs **266** of the PKES controller **277** to be plugged into a first branch of the T-connectors **299,** while the e-Key module **200** is connected to a second branch, before connecting the third branch to the PKES controller **277** (i.e., plugged directly in their previous and corresponding inputs/outputs **266**).

It will be appreciated that one of the main advantages of using direct connections to the PKES controller **277** module is the easy prevention of unauthorized use (e.g., wireless communication) of the key fob **201** since, in some embodiments, there may not be any transceiver connected thereto.

It will be appreciated that, while some of the preferred embodiments avoid the need for any transceiver (e.g., transmitter antenna) to be connected or connectable to the key fob **201,** some implementations of the proposed e-Key module may comprise a transmitter antenna (not shown) that can be connected or selectively connectable (e.g., controlled by the control circuit **204**) to the key fob **201** in order to enable the e-Key module to send direct commands (e.g., lock or unlock commands) directly from the key fob to the PKES system.

The control circuit **204** shown in Figure **3A** and **3B** are one possible analog implementations into a logic circuit using switches (**S1, S2, S3, S4,** [ ..], **SN**), logic gates (e.g., AND gates) and input signals **205** from the analyzer **203,** input signals **207** from the e-Key module's connections to the antennas (**221, 222, 223, 224,** [ ..], *N*) of the PKES system **220,** and input signals from the optional e-Key module's connections to one or more of the request switches **206** of the PKES system **220.**

It will be appreciated that some of the wired connections of the control circuit **204** corresponding to the switches **S3, S4,** and **S*N*** illustrated in Figures **3A** and **3B** are in dashed line to indicate that they may be optional depending on the embodiment.

In one embodiment, the control circuit **204** may comprise a minimum of two switches **S1** or **S1'** and **S2.** The switch **S1** can be used to control (e.g., close or open) a connection between the wireless key fob receiver **211** (i.e., in the present document this can be an antenna, receiver, transceiver, etc. that can at least receive wireless signals from the PKES system) and an antenna input of the key fob **201** for receiving challenge communications from the PKES system. The switch **S1'** can be used to control a connection between the wired connection to the inside-antenna **221** of the PKES system and an antenna input of the key fob **201** for receiving challenge communications from the PKES system. The switches **S1** or **S1'** can be controlled by the control circuit **204** respond to the "inside" position input **206In** from the analyzer **203.** The switch **S2** (or additionally switches **S3** to **S*N*)** can be used to control a connection between the one of the outside-antennas **207** of the PKES system and an antenna input of the key fob **201** for receiving challenge communications from the PKES system. The switch **S2** (or additionally switches **S3** to **S*N***) can be controlled by the control circuit **204** respond to the "outside" position input **205out** from the analyzer **203** and, optionally, to an input from the wired connection to any of the PKES request switches **206.**

The function of the control circuit **204** can be selectively and logically controlling the access/connectivity of the one or more antennas (**221, 222, 223, 224,** [...], **N**) of the PKES system to the key fob **201.** Essentially, the control circuit **204** receives various information as inputs (e.g., triggering of a request switch) and selectively connects the desired antenna of the PKES system **220** (preferably the input/output **266** of the PKES controller **277**) to the antenna input of the key fob **201** thereby allowing for receiving, sending or exchanging information (e.g., challenge communication/messages/signals from the PKES controller 277 and response communication/messages/signals from the key fob **201**).

It will be appreciated that the control circuit **204** may only close only one switch at a time, which may be preferable to avoid sending more than one challenge communication to the antenna input of the key fob, thereby avoiding any contradictory or duplicate challenge communications.

In some embodiments, the function of the control circuit **204** of selectively controlling (e.g., limiting) the connections between the PKES antennas and the key fob may be provided by alternative analog circuits (e.g., in a Field Programmable Gate Array (FPGA)) or by any suitable alternative combination of hardware (e.g., processor and memory) and software (e.g., program code emulating the digital circuit or algorithms achieving similar or equivalent functions) that may be stored in memory and executed by a dedicated processor.

Figures **3A** and **3B** present two embodiments of the control circuit **204** that can be used to enable communication, via connectable connections, between the key fob **201** of the e-Key module and the inside-antenna **221** of the PKES system when the driver's device is detected (determined by the analyzer **203**) to be inside the vehicle. It will be appreciated that the connection (corresponding to the first switch **S1**) between the key fob **201** (e.g., its antenna input) and the PKES inside-antenna **221** presented in Figure **3A** and in Figure **3B** are both embodiments of connectable connections that can respectively be used by the control circuit **204** to enable wireless and wired communication therebetween when the analyzer **203** determines the driver's device is inside the vehicle.

Figure **3A** presents a first embodiment where the communication therebetween can be enabled by allowing a wireless key fob receiver **211** (e.g., LF receiving antenna) of the e-Key module **200** to receive and transmit to the key fob **201** (e.g., a LF antenna input of the key fob) a wireless signal (e.g., LF challenge communication) from the inside-antenna **221** of the PKES system **220.** In one embodiment, communication can be selectively established (e.g., by closing a switch **S1** between the wireless receiver **211** of the key fob and the antenna input of the key fob **201**) by the control circuit **204** when the analyzer **203** concludes that the driver's device is inside the vehicle. In some embodiments, to prevent signal interference, contradictory response communications and/or unauthorized use of the vehicle, it may be preferable or necessary to disable communication between the inside-antenna **221** and the key fob **201** when the device is located outside or not detected (i.e., when the analyzer **203** concludes that the driver's device is not inside the vehicle), which may be achieved by selectively disabling the wireless receiver **211** of the key fob (e.g., by opening switch **S1**) using the control circuit **204** and in response to the analyzer's signal/data.

Figure **3B** presents a second embodiment where the control circuit **204** enables the communication between the key fob **201** and the inside-antenna **221** by providing and selectively establishing (e.g., closing a switch thereon) a wired connection from the key fob signal input (e.g., the antenna input of the key fob **201**) to one of the inside-antenna **221,** the inside-antenna input/output of the PKES controller **277,** or any wired connection therebetween. It will be appreciated that communication between the inside-antenna **221** and the key fob **201** should also preferably be disable when the analyzer **203** concludes that the driver's device is not inside the vehicle by disconnecting the key fob (e.g., by opening switch **S1**) using the control circuit **204** and in response to the analyzer's signal/data.

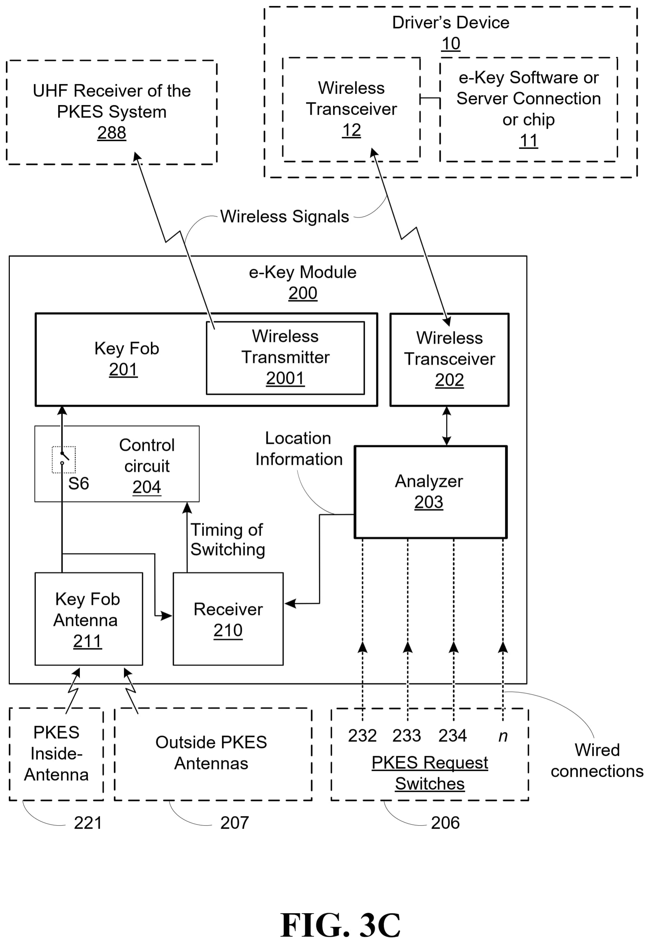

Note that the letters **"*N*"** and **"*n*"** in Figures **3A****,** **3B** and **3C** serve to illustrate possible additional connections or input that may be, in some embodiments, used by the control circuit **204** to achieve its functions. For example, in some embodiments, the e-Key module **200** may be configured to enable or provide a remote start of the vehicle's engine such that addition inputs from the necessary additional request switches may be required by and added to the control circuit **204.** In some embodiments, the additional PKES request switches ***n*** can include any additional access point to the vehicle or any other interface for use by the driver or passenger (e.g., start/stop button **208,** brake pedal **209,** lock button, window control button, sunroof controls, etc.).

It will be appreciated that in some alternative embodiments of the e-Key module **200,** the key fob **201** is not controlled so as to determine which antenna it is physically connected to, but may instead rely on timed connection(s) to a fob antenna to force the key fob **201** to respond to the PKES challenge communication as if the fob is located where the driver's device is.

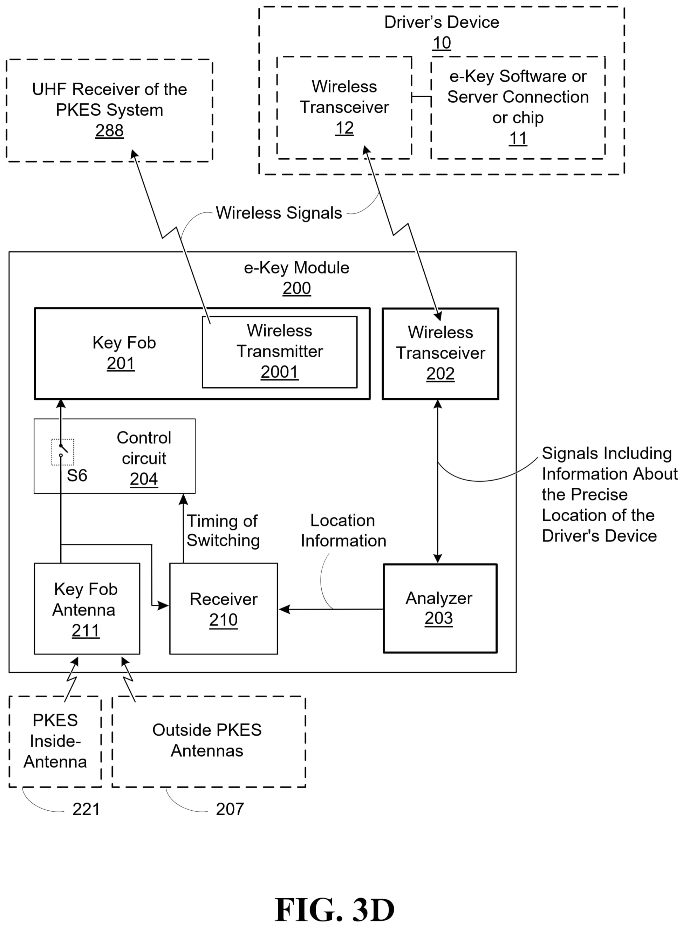

For such embodiments, a challenge message receiver **210** external to the key fob **201** is provided. This is shown in Figures **3C** and **3D****.** Receiver **210** may detect any suitable time intervals or points in the PKES challenge message transmission, for example, the end of the cryptographic challenge itself. Since the PKES system will determine the location of the authenticated key fob based on when a fob responds, the control circuit **204** can then use the fob antenna switch **S6** to adapt how the fob responds to PKES challenge message communications so as to give the appearance of the fob being at a desired location, such as at a door, trunk or inside the vehicle.

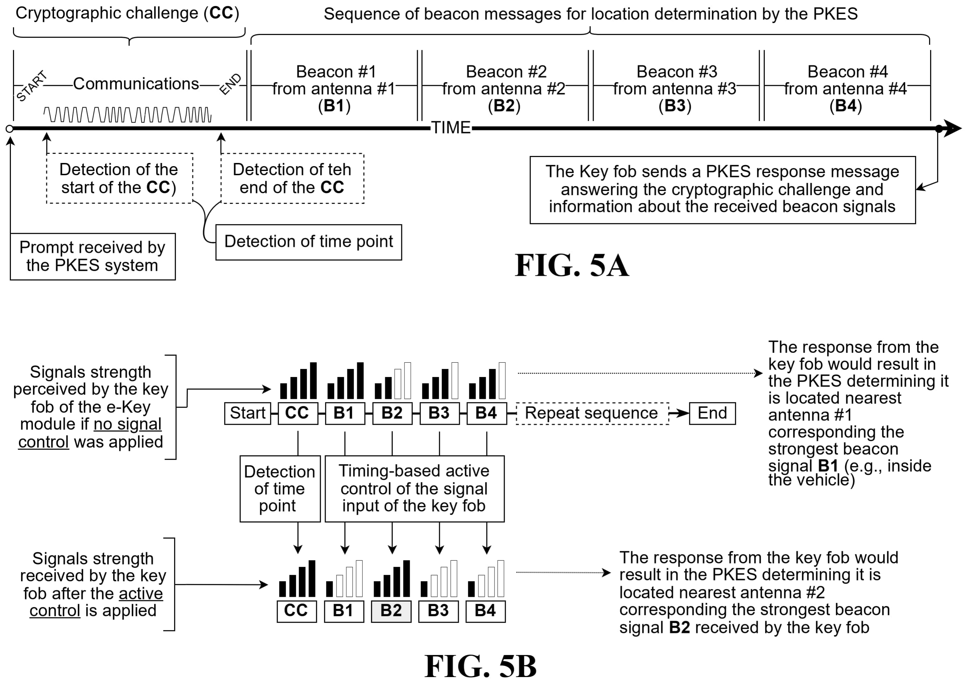

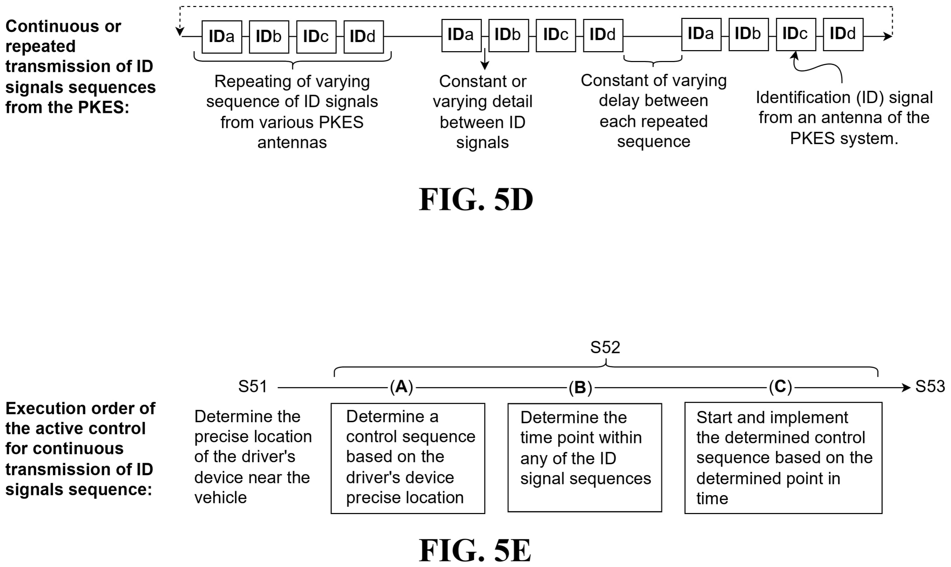

It will be appreciated that having proper control timing to provide the desired results by ensuring accurate control over time of the wireless signals from the various antennas of the PKES system to the input antenna of the key fob. In one embodiment, the receiver **210** can determine the proper timing (e.g., identify a specific time slot/point) that is important for (e.g., for use by) the control circuit **204.** In most embodiments, the time point considered/determined can be one or more specific moment within the wireless signal sequence that is indicative of a particular point/progression within the signal sequence. For example, the time point can be, but may not be limited to, a start and/or an end of a cryptographic challenge message/signal (as shown in Figure **5A** or **5B**), a point within (start, end, or any point therebetween) an ongoing or continuous signal sequence (as shown in Figure **5D**). In one embodiment, the determined time point is used to start/trigger the time-based control (e.g., a predetermined or defined control execution order) or to determine time when to start it thereafter (e.g., start a timer or delayed control execution order).

Some of the conventional PKES communications may operate by having the vehicle send a cryptographic challenge message in response to a prompt, such as the triggering of a request switches **206** (e.g., door contact or the start button **208**). Additionally, in some cases, the vehicles may continuously poll/ping key fobs for authentication and location prior to any prompt.

Reference is now made to Figure **5A** where one embodiment of a typical signal sequence generated by some models of the PKES system, which are being triggered when the PKES system received a prompt (request signal). In vehicles that use prompts, the first transmission from the PKES system can typically include a cryptographic challenge **CC** message (e.g., sent once from a central antenna), followed by beacon messages (**B1, B2, B3, B4,** etc.) sent from plural antennas throughout the vehicle, such as a driver's side door antenna **222,** a passenger side door antenna **223,** a trunk antenna **224** and an interior antenna **221.** Typically, the beacons may be transmitted in a sequence, and the key fob may receive these beacons, measure their respective signal strength, and include in the cryptographic response an indication of beacon signal strength so that the PKES can not only authenticate the fob but also determine its position with respect to the vehicle.

In vehicles that do not use prompts to control PKES challenge transmissions, the PKES system may continuously transmit an identification (ID) signal from each of the plural antennas throughout the vehicle, such as a driver's side door antenna **222,** a passenger side door antenna **223,** a trunk antenna **224,** an interior antenna **221,** or a combination thereof. An ID signal may comprise ID information specific/unique of one vehicle and may comprise vehicle ID information and/or low levels of encryption corresponding to the vehicle to be decrypted by the compatible key fob, thereby ensuring a match between the PKES and its compatible key fob. The ID signals may be transmitted in a sequence (e.g., the continuous ID signal sequence illustrated in Figure **5D**) from which the key fob may determine if the ID signal is from its vehicle, and if yes, it may send a response message comprising ID signal strength information (e.g., the strongest ID signal transmission). This response can be related to location of the key fob. At this point, the vehicle may send the cryptographic challenge message, and a valid response from the challenge will authenticate the key fob for the related location from the previous response. With this pre-authorization, if the driver actuates a request switch **206** (e.g., door button or the start button **208**), the PKES responds accordingly without further involvement of the key fob for a desired period. After the desired period, the PKES system may repeat the authenticating process and repeat the determining of the key fob location.

In the case of PKES systems that respond to a prompt, as described above and as illustrated in Figure **5A**, timed connection(s) may be required to ensure that the inside key fob **201** of the e-Key module **200** receives only the appropriate beacon signal (e.g., the beacon signal of the antenna closest to the location of the driver's device **10** determined by the e-Key module **200,** but not the other antennas so that the response message from the key fob **201** matches the determined location of the driver's device **10** and/or information expected by the PKES system to match the prompt source). This involves using the control circuit **204,** the receiver **210** and the analyzer **230** to control the connection between the wireless key fob receiver **211** (key fob's antenna input) and the key fob **201.**

In one embodiment, this control over this connection can be used to allow the desired correct beacon signal corresponding to the location of the prompt source and/or of the driver's device to be received, while disconnecting or attenuating the "undesired" beacon signals corresponding to other locations. For example, see Figure **5B** illustrating one embodiment of the proposed control, which implies modulating the signal strength of various beacons of the signal sequence from the PKES system. Figure **5B** shows the effect achieved by the proposed timing-based control of the wireless PKES signals in the case of the embodiment of Figure **5A** (similarly to the controlled wired connection to the PKES antennas), where the strength of various signals from the PKES system are being modulated before being transmitted to and/or received by the key fob of the e-Key module to simulated signals as received from a desired outside position that corresponds to the determined position of the driver (e.g., based on a detected request signal or a determined precise position of the driver's device). In this way, the key fob **201** will provide (e.g., process, encrypt, generate, send wirelessly, etc.) a response indicating a location. When that location matches the driver's request, namely door button press or start button press, the PKES system will proceed in accordance with the driver's request.

In the case of PKES systems that may not require any prompt and are continuously checking for valid key fobs by continuously transmitting ID signals, the fob **201** needs to receive the appropriate ID signal but not the others. This likewise involves control over the connection to the fob's antenna to disconnect or modulate the unwanted beacons while allowing the correct beacon signal to the received. As other nearby vehicles may be transmitting their ID signals, receiver **210** may need to be configured to decode the ID signals of the vehicle to which it is associated so as not to be confused by ID signals from other vehicles. As illustrated in Figure **5D****,** the sequence of ID messages (e.g., ID massage sequence from various PKES antennas: **IDa, IDFb, IDc** and **IDd**) may be continuous or repeatedly broadcasted by the PKES system, wherein the delay between each sequence and/or each ID signals may be of any length (e.g., zero delay, short delay or greater than short) and may be constant or varying (e.g., based on the PKES model or random intervals).

While Figure **3C** illustrated that control circuit is connected to PKES request switches **206** (e.g., door contact connections), a connection to request switches may not be required when the analyzer **203** is able to resolve the position of the driver's device **10** so as to confirm a location at a specific door or trunk location. In the case of Bluetooth^{®} being used as the wireless transceiver **202,** accurate location may be achieved by providing additional Bluetooth beacons in the vehicle. Such beacons may detect the signal strength of the driver's device **10** and relay that information to the module **200** for the analyzer **203** to process. However, in embodiments wherein the wireless transceiver **202** includes UWB, the precise location of the driver's device may be determined using a UWB communications module that can then provide an exact location of the driver's device **10** to the analyzer **203.**

When such precise location of the driver's device is provided, key fob **201** will respond to the PKES challenge transmissions such that it matches the location of the driver's device. In this case, if the driver triggers a request switch **206** (e.g., actuates a door or start button **208**), the PKES system will respond accordingly. In such embodiments, the module **200** need not be connected to any wired connection in the vehicle, although connection to vehicle power may be desirable.

Figure **3C** presents one embodiment of the proposed e-Key module using timed connections to the key fob antenna in order to control the key fob response sent to the PKES system, when the location of the driver is determined using the detection of a request signal on the wired connections to the request switches. The analyzer **203** determines the general location of the driver's device **10** (Is it located inside or outside the vehicle? Is it located beyond or within the near-the-vehicle threshold?) and determines the likely position of the driver based on a detected prompt. The information about the location of the driver may be generated by the analyzer **203** and may be sent to the receiver **210,** which determines (generates or selects from a saved list) a sequence based on the location of the driver and the model of the vehicle (depending on the sequence of beacons of challenge messages unique to a manufacturer or model of vehicle). The receiver implements the determined sequence of input control using the control unit **204** (e.g., by opening or closing switch **S6** and/or by modulating the signals). The receiver **210** can consider/analyze signals received by the key fob input antenna **211** to determine the right timing/moment (e.g., the end of the challenge message, end of an ID signal, start of a sequence of beacon signal; or a known/recognized time interval or beacon signal of a repeating sequence of time intervals or beacon signals) to start the implementation of the determined sequence.

Figure **3D** presents one embodiment of the proposed e-Key module using timed connections to the key fob antenna in order to control the wireless inputs signal of the key fob and influence its response sent to the PKES system, when a precise location of the driver can be determined, e.g., using wireless signals (Bluetooth^{®}, UWB, etc.) with the driver's device. Similarly to Figure **3C****,** the receiver **210** can determine and implement (e.g., using the controller **204**) a control sequence based on the model of the vehicle and on the precise location of the driver's device determined by the analyzer **203** (e.g., using UWB or using a plurality of Bluetooth^{®} devices placed around the vehicle to communicate with the driver's device).

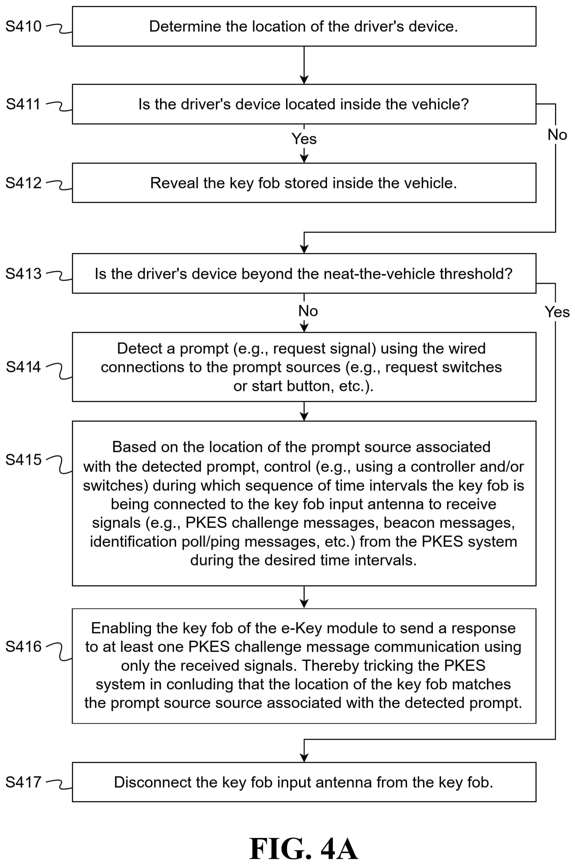

Figure **4A** shows steps of one embodiment of a proposed method for using the embodiments of the e-Key module **200** (e.g., see Figure **3C**) that uses or relies on timed connections to the key fob antenna based on the request signal detected on the wired connections to the request switches. The determination of the location of the driver's device by the e-Key module **200** can be initiated in step **S410.** In step **S411,** when the driver's device can be determined by e-Key module to be inside the vehicle, step **S412** of revealing the key fob of the e-Key module stored inside the vehicle can be revealed to enable all native functions of the PKES system available when the key can be inside the vehicle. When the driver's device can be determined by e-Key module in step **S411** to not be inside the vehicle, step **S413** can determine if the driver's device is beyond or within the near-the-vehicle threshold. If it can be beyond the threshold, the key fob can be isolated so that the PKES system can be unable to detect the presence of the key (e.g., by disconnecting the key fob input antenna **211**) as per step **S417.** If the driver's device is within the threshold, step **S414** of detecting the prompt signal using the wired connection to the prompt sources or their connections to the PKES controller. In step **S415,** the detected prompt signal can be used to determine the control sequence corresponding to the prompt source and the model of the vehicle, e.g., as the above receiver can do. In step **S415,** the determined control sequence can be used (e.g., by opening or closing switch **S6** and/or by attenuating or amplifying the signals) so that only the desired or modulated (i.e., attenuated or amplified) ones of the signals from the PKES system are received by the key fob **201.** Therefore, the key fob will use/process the received or modulated signals allowed by the implementation of the timing/control sequence and provide a corresponding response. Once the control sequence has been completed (at least once) the remaining step **S416** of enabling the key fob to send its provided response to the PKES system can be completed. Therefore, the response from the key fob is interpreted by the PKES system so that the PKES system considers the stored key fob **201** of the e-Key module **200** as being located nearest the prompt source having sent the prompt signal, while, in reality, the key fob remains stored and secured inside the vehicle.

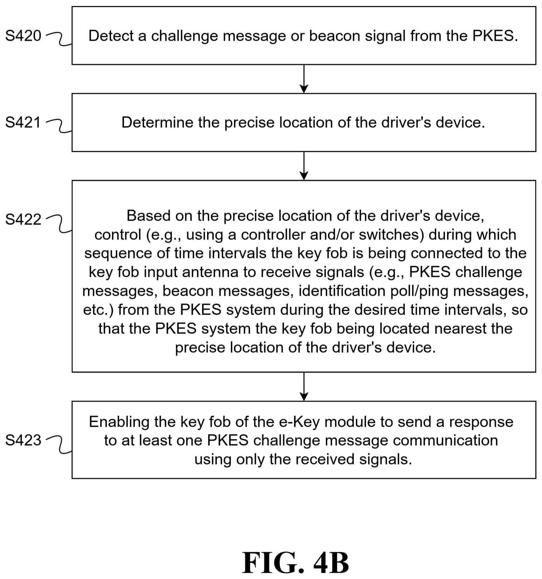

Figure **4B** shows steps **S420** to **S422** that can be used as alternatives to steps **S414** to **S416** of Figure **4A** for use when using the embodiments of the e-Key module **200** (e.g., see Figure **3D**) when the e-Key module **200** can determine the precise location of the driver's device, thereby avoiding the need for detecting a prompt signal. It will be appreciated that steps equivalent to steps **S410** to **S413** and **S417** of Figure **4A** may proceed the steps of Figure **4B****.** Step **S420** can include detecting a wireless signal (e.g., challenge message communication, ID request/signal, beacon signals, etc.) indicative of intended use of the vehicle (a signal of the PKES system corresponding to a user interacting with, trying to access or use the vehicle). Step **S421** can comprise determining the precise location of the driver's device **10,** e.g., using the analyzer **203** and wireless communication with the driver's device, such as using UWB or using a plurality of Bluetooth^{®} devices placed around the vehicle. Step **S422** can include using the determined precise location of the driver's device to determine the appropriate corresponding control sequence for the vehicle's model. In step **S422,** the determined control sequence can be used (e.g., by opening or closing switch **S6** and/or by attenuating or amplifying the signals) so that only the desired or modulated ones of the signals from the PKES system is received by the key fob **201.** Therefore, the key fob will use/process the received or prioritized signals allowed by the implementation of the timing/control sequence and provide a corresponding response. Once the control sequence has been completed (at least once) the remaining step **S423** of enabling the key fob to send its provided response to the PKES system can be completed. Therefore, the response from the key fob is interpreted by the PKES system so that the PKES system considers the stored key fob **201** of the e-Key module **200** as being located near the determined precise location of the driver's device **10,** while, in reality, the key fob remains stored and secured inside the vehicle.

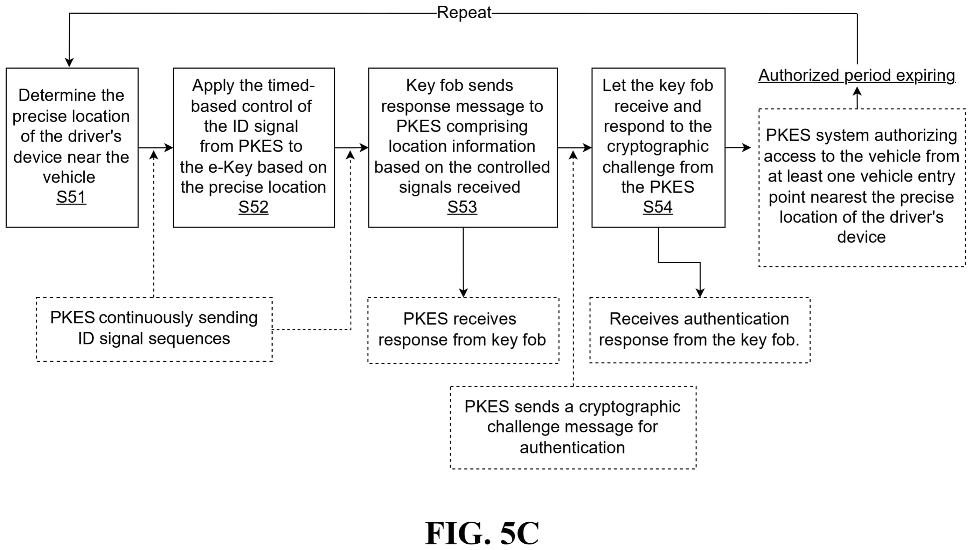

Now referring to Figure **5C****,** it will be appreciated that, in cases where the PKES system does not require reception of a prompt to initiate the signal sequence (e.g., when the sequence of ID signals is similar to the one illustrated in Figure **5D**), the sequence of steps **S51** to **S54** is one possible implementation of step **S422** from Figure **4B****.** Figure **5C** shows a flow chart of various steps that can be completed by the proposed e-Key module to force the PKES system to behave as desired, in the case where the PKES system may not have to be triggered by a prompt and continuously sends sequences of ID signals to detect the presence of a corresponding key fob and determine its location relative to the vehicle.

In step **S51,** the precise location of the driver's device relative to the vehicle may firstly be determined (e.g., by the analyzer **203**). In one embodiment of step **S51,** the analyzer **203** of the e-Key module **200** can determine (e.g., using triangulation or UWB) the precise position of the driver's device **10.**

In step **S52,** a timing-based control of the wireless ID signals may be implemented for transmitting ID signals to the key fob **201** (e.g., using the control circuit **204** and the receiver **210** and based on the signal received from the key fob antenna **211** and on a determined time point). In one embodiment, step **S52** may be similar to the control illustrated in Figure **5B** wherein the beacons **B#** are replaced by ID signals **ID#** and the first cryptographic challenge **CC** can be part of a preceding ID signal sequence).

In step **S53,** the e-key module can ensure that a first response message generated by the key fob **201** can be unimpeded and broadcasted to be received by the PKES system. Note that, in some embodiments, the first response message from the key fob may comprise decrypted data (when the ID signals have some level of encryption) and should comprise location information (e.g., ID signal strength, timing of detection and/or antenna ID) based on the ID signals it received following the controlled transmission.

Step **S54** may include transmitting the cryptographic challenge message from the PKES system to the key fob **201** so that the key fob can generate a proper response message thereto (e.g., decrypt the message to authenticate itself) and broadcast this second response message unimpeded (so the PKES receives the response message for authentication).

It will be appreciated that, because the authorization of the key fob at a given location will be valid for a limited following period (e.g., a few milliseconds or seconds), steps may be **S52** to **S54** may be repeated once a following period has elapsed if the determined precise position of the driver's device remains nearest to the same vehicle access point (e.g., door or trunk) or steps **S51** to **S54** may be repeated once the following period has elapsed if the determined precise position of the driver's device changes to be nearest another of the vehicle access points.

Figure **5C** also shows in dotted lines some of the steps performed by the PKES, which may include continuously sending the ID signal sequences, receiving the key fob response to the ID signals, sending the authentication (i.e., cryptographic challenge) message to the key fob, receiving the authentication response from the key fob, and determining that the key fob is positioned relative to the vehicle (based on location information from the first key fob response) and authenticated (based on the second response from the key fob) such that any corresponding interaction with the vehicle (e.g., opening a door) that matches the position of the "key fob" considered by the PKES will be authorized for a following period. Now referring to Figure **5E** that presents various steps of one possible embodiment of step **S52** of the control execution order presented in Figure **5C****.** For this example, step **52,** which follows step **S51,** may comprise:
(**A**) a first sub-step of determining (e.g., defining or selecting/uploading from a predefined list) at least one control execution order based on the precise location of the driver's device relative to the vehicle. In one embodiment, the determination of the control execution order may be completed by the receiver **210** based on the precise location of the driver's device determined and provided by the analyzer **203** or may be determined and provided directly from the analyzer **203;**
(**B**) a second sub-step of determining (e.g., identifying) a time point that may be any specific moment (e.g., start or end of a specific ID signal, start or end of an ID signal sequence, the ongoing ID signal, order position within an ongoing ID sequence, a delay between ID signals or between sequences, etc.) within the continuously repeated ID signal sequence (e.g., as illustrated in Figure **5D**) which may be used for timing the execution of the control execution order (e.g., to determine and initiate a countdown for starting the control execution order). In one embodiment, the determining of the time point may be completed by the receive **210** based on and by processing (e.g., analyzing) the signal received via the key fob antenna **211;** and
(**C**) a third sub-step of executing the control execution order determined in sub-step **B** and at a moment according to the time point determined in sub-step **C.** In one embodiment, the control execution order can be a timing-based active control of the key fob input antenna **211** using the control circuit **204** and the receiver **210,** which can receive and process inputs from the key fob antenna **211.**

As illustrated in Figures **3A****,** **3B****,** **3C****,** **3D** and **3E****,** the propose e-Key module **200** may comprise a key fob **201,** which can be provided by a OEB key fob, a key fob's integrated circuit comprising the key, or the key fob mounted on and connected to a receiving circuit of the e-Key module, all of which may be compatible with (e.g., programmable with or associated with) the PKES system **220** of the receiving vehicle.

The key fob **201** can be designed to be programmed as a smart key fob duplicate or a new smart-key fob for the PKES system. The key fob **201** may be registered with the vehicle as an additional key, thereby allowing the key fob to lock/unlock doors, start ignition, or perform other functions that a smart key might perform. The key fob may function as a smart key fob to selectively communicate directly with the vehicle (e.g., with the PKES system **220**).

In some embodiments, the key fob can allow for the system, as described in the previous figures, to be put in place without sacrificing an OEB key fob provided by the vehicle manufacturer or dealer to the vehicle owner. It would also allow for greater protection from the risk of theft, as the theft of the key fob **201** or e-Key module **200** with a key fob would not lead to the theft of an OEB key fob of the vehicle which could unlock the vehicle on its own.

The e-Key module with an embedded key fob may include additional anti-theft properties as well. If the key fob, or any other part of the e-Key module such as a Key Box Controller, detects non-authorized attempts to access the e-Key module, it may alert a system administrator of the attempts, as well as transmit information about the attempts (time, location, etc.) and proceed to erase the key fob's access to the vehicle to prevent any future non-authorized attempts. Furthermore, the key fob can be arranged to erase its memory when tampered with or it can be physically secured (e.g., epoxied) to prevent access to its memory contents.

In one embodiment, the e-Key module **200** can comprise a wireless transmitter (e.g., the UHF transmitter **2001**) for use by the key fob **201** to provide some additional control and communication features that can be native to the key fob, such as being able to communicate directly to the PKES system **220** (e.g., to the PKES controller **277**) a request/command to lock or unlock the car, which can be activated in response to commands from the driver's device (e.g., the lock of unlock button illustrated in Figures **6A** to **6C** or of a BLE device). In such embodiments, the wireless transmitter (e.g., antenna) for the key fob may only be selectively connected thereto using the control circuit **204** so that wireless communication from or with the key fob **201** is enabled and possible only when desired by the e-Key system **200** thereby reducing risks of unauthorized use of the wireless signals.

In some embodiments, the key fob **201** may have additional native features and functionality or alternative features known in the art.

For example, the e-Key module can receive a direct request from a user's smartphone to lock or unlock the doors, to close a tailgate, activating a panic mode or to start the vehicle. The e-Key module may receive, and/or determine using the analyzer **203,** the location of the driver's device **10** during the request.

It will be appreciated that the various features provided by the e-Key module (e.g., all features of a conventional key fob) can be provided for specific types of driver's device, such as app controls or specific sequence of button pushing/toggling (e.g., holding of a button or push two buttons simultaneously, toggle between two buttons) of Bluetooth^{®}+MCU device. It will be appreciated that the use of sequences of button pushing or toggling can allow the driver's device to reduce the number of buttons needed on the driver's device to perform some, most or all the functions allowed by the e-Key module. In one embodiment, the driver's device can be a BLE device comprising a MCU and only one pair of buttons (e.g., one lock and one unlock button).

The e-Key module **200** may comprise a wireless transceiver **202** for exchanging wireless signals with a driver's device **10** (e.g., a compatible wireless transceiver **12** of the driver's device **10**). This component may be essential to provide/enable the required communication (exchange of information and signals) between the e-Key module **200** and the driver's device **10.**

The wireless transceivers (receiver or transmitter or transceiver) **202** or **12** can be any state-of-the-art radio frequency antennas, of the short-range wireless communications, such as Bluetooth^{®} or UWB, for example.

The e-Key module **200** may comprise an analyzer **203** connected to the wireless transceiver **202** (e.g., a Bluetooth^{®} and/or UWB device) and to the control circuit **204.** In some embodiments, information (e.g., communication signals from the driver's device **10**) from the wireless transceiver **202** can be an input to the analyzer **203.** The analyzer **203** may be configured so as to determine the position of the driver's device based on characteristics (e.g., strength or latency) of the signals received from the driver's device **10.** The output of the analyzer **203** (e.g., whether the driver's device is positioned inside the vehicle or outside the vehicle within reasonable distance (e.g., the near-the-vehicle threshold), and optionally an output indicating the absence of driver's device or that it is located outside the allowed outer distance from the vehicle) may some of the inputs of the control circuit **204.**

In one embodiment, the characteristic of the signal used to determine the position of the driver's device is the latency that enables triangulation using at least two wireless transceivers **202.**

The control circuit **204** may connect the antenna input of the key fob **201** to the inside-antenna of the PKES system **220** when the analyzer **203** determined the position of the driver's device to be inside the vehicle (e.g., when the input signal from the analyzer **203** is received on the "inside" position input **206In**). In one embodiment, the connection is established by closing a switch **S1** or **S1'** of the control circuit **204.**

The control circuit **204** may connect the key fob **201** to the inside-antenna of the PKES system **220** when the analyzer **203** determined the position of the driver's device to be outside the vehicle and within a reasonable distance (e.g., when the input signal from the analyzer **203** is received on the "outside" position input **205out**).

Therefore, as illustrated in Figures **3A****,** **3B** and **3E****,** when receiving the input signal from "outside" position input **205out** from the analyzer **203,** the control circuit can establish various connections between the key fob **201** and one of the following outside-antenna **207:**
- the outside-antenna of the driver's door **222** by closing a switch **S2** therebetween when the AND gate receives the "outside" input from the analyzer and receiving an input signal from the outside request switch of the driver's door **232;**
- the outside-antenna of the passenger's door **223** by closing a switch **S3** therebetween when the AND gate receives the "outside" input from the analyzer and receiving an input signal from the outside request switch of the passenger's door **233;**
- the outside-antenna of the trunk/tailgate **224** by closing a switch **S4** therebetween when the AND gate receives the input information/signal from the analyzer and receiving an input signal from the outside request switch of the trunk/tailgate **234;** and
- any other outside-antenna ***N*** by closing a switch **SN** therebetween when the AND gate receives the "outside" input from the analyzer and receiving an input signal from another outside request switch **n.**

In one embodiment, when the driver's device is detected and authenticated, the analyzer **203** can determine a position of the driver's device relative to the vehicle so that the control circuit **204** can perform:
- when the position is determined to be inside the vehicle, connecting through electronic wiring an antenna input of the key fob to an inside-antenna input/output of saif PKES system;
- when the position is determined to be within a near-the-vehicle threshold, i) detecting any prompt (i.e., triggering of a request switch) of the PKES system, and ii) when a prompt is detected, momentarily connecting through electronic wiring the antenna input of the key fob to an input/output of the PKES system for connecting an outside-antenna of the PKES system corresponding to detected prompt (i.e., the request switch being triggered); and
- when the position of the driver's device is determined to be outside of the near-the-vehicle threshold, disconnecting the antenna input of the key fob from any antenna or from the PKES system; and

It will be appreciated that, if the driver's device is not detected or not authenticated, the control circuit may instead disconnect (which includes preventing any connecting to) the antenna input of the key fob from any antenna or from the PKES system.

In some embodiments, the function of the analyzer **203** may be provided by analog circuits (e.g., by logic circuitry or in a Field Programmable Gate Array (FPGA)) or by any suitable alternative combination of hardware (e.g., processor and memory) and software (e.g., program code emulating the digital circuit or algorithms achieving similar or equivalent functions) that may be stored in memory and executed by a dedicated processor.

It will be appreciated that the analyzer or some of its functions (e.g., determining the position of the driver's device relative to the vehicle and sending the determined position or the corresponding information to the e-Key module) may be implemented in the driver's device (e.g., by a mobile computer or smartphone application (app) provided on the driver's device), such that the processing resources of the driver's device is utilized (e.g., to reduce the computer resource requirements of the e-Key module by needing less processing power for the analyzer of the e-Key module).

In some embodiments, the functions of the control circuit **204** (e.g., the selective connecting described herein) may be implemented in software (e.g., programmed into a suitable program or algorithm) run by a dedicated processor or a common processor of the e-Key module **200.** While Figure **3A****,** **3B** and **3E** present one of the possible circuitry (e.g., by a logic circuitry or FPGA) embodiment of the control circuit **204,** it will be appreciated that the control circuit **204** can also be provided by any suitable alternative combination of hardware (e.g., processor and memory) and software (e.g., program code emulating the digital circuit or algorithms achieving similar or equivalent functions) that may be stored in memory and executed by a dedicated processor. In one embodiment, the control circuit **204** can comprise a combination of logic circuits and programs (software). In one embodiment, the information/signals exchanges between the key fob **201** and the PKES system **220** are recreated and selectively communicated.

The above-mentioned processors can comprise one or more of a processing unit, which may be any suitable general-purpose programmable hardware (central processing unit (CPU), logic circuitry, microprocessor, DSP, etc.). While the processor can be unitary, it may also be multicore, or distributed (e.g., a multiprocessor).

The above-mentioned memory can be any suitable type of memory known in the art (random-access memory (RAM), read-only memory (ROM), solid-state drive (SSD), hard disk drive (HDD), etc.), or a combination thereof, and can be used to store operation codes, instructions and programs to execute the required steps of at least one embodiment of the proposed method.

It will be appreciated that the various elements (e.g., the analyzer **203,** the control circuit **204,** and even the Key fob **201**) of the e-Key module **200** may be implemented in a separate or common processors and memory.

One of the advantages of some embodiments of the proposed e-Key module is that, since the key fob **201** is not connected to any wireless transceiver (e.g., antenna), it can remain constantly active (On) and therefore avoids the need for any active control of the state (partially or completely disabled/enabled) of the key fob **201** itself.

Some state-of-the-art vehicle has started migrating and replacing their conventional wiring of the various components of their components using Bus-based communication networks, such as CAN (Controller Area Network) Bus, LIN (Local Interconnect Network), or sometimes proprietary OEM networks. This allows efficient and secure communication between different PKES system elements and reduces the total length and weight of wiring required. Bus-based communication can have a plurality of PKES elements (e.g., trigger switches, antennas, engine control units, PKES controller, etc.) connected thereon and communicating therethrough, such that each communication/signal may comprise an identifying address. Some of communication/signals over the bus may be encrypted. In such cases, the various elements of the PKES system can have a dedicated decoder or microcontroller for connecting to communication bus and for enabling exchange of communication/signals/messages therethrough.

It will be appreciated that the proposed method and device can be implemented using Bus-based wiring and communication. In such embodiments, the various physical connections (e.g., each wired connection to the PKES controller) described above may all be provided by a single direct connection (e.g., T-connection or splicing) to communication bus of the vehicle.

Evidently, in case of use with a vehicle using a mix of both Bus-based communication and conventional wiring, the e-Key module may provide one physical connection to the bus and any additional wired connection to one or more of the conventional wired connections.

Some embodiments of the e-Key module **200** may be implemented in vehicles utilizing Bus-based communication (e.g., for use with a PKES system utilizing a communication bus to exchange information with its various components, such as its PKES controller **277,** request switches **206,** antenna **207,** engine controller, start/stop button **208,** brake pedal **209,** etc.). In such embodiments, a single connection (e.g., via connecting or splicing) to communication bus of the vehicle may be used in place of the plurality of connections (e.g., electronic wiring) of the e-Key module **200** (e.g., the inputs of the control circuit **204**) to the plurality of connections between the various components of the PKES system **220.** In that sense, in the context of the present document, a single/common connection to communication bus of the vehicle is one possible embodiment of the various possible combinations of electronic wiring of the e-Key module **200** to the components of the PKES system **220** (e.g., electronic wiring for connecting to outside request switches for detecting or sending any prompt/triggering signal, electronic wiring for connecting to outside-antennas of the PKES system, and electronic wiring for connecting to an inside-antenna of the PKES system) as defined herein.

It will be appreciated that the selective connecting provided by the combination of the analyzer **203** and the control circuit **204** may be performed by the same via the single connection to communication Bus.

When the electronic wiring of the e-Key module **200** to the PKES system **220** is a connection to the vehicle communication bus, the control circuit **204** (or in some embodiments, the analyzer or a dedicated microcontroller) can be configured to pick up or intercept some or each communication signals on communication Bus, interpret and/or process the information of communication to generate or select a response communication coherent with the method detailed herein (e.g., see Figure **1A**), and send the response to the desired component (e.g., the PKES controller 277) of the PKES system through the PKES communication Bus.

One embodiment of the e-Key module **200** can be configured to process (e.g., using the control circuit **204** and/or analyzer **203**) to process a bus communication by completing one or more of the following steps:
1) identifying a recipient and/or a sender of communication (e.g., determine which of the PKES component is being addressed using information comprised in a header of communication);
2) determining the nature or content of communication (e.g., determining that communication comprises a challenge communication from the PKES controller);
3) identifying or extracting information from communication (e.g., selecting a nonce, public key, a test code, random string and/or a hash from a challenge communication);
4) decrypting any encrypted information of the bus communication;
5) transmitting or communicating information (e.g., original data or recreated data from the challenge communication) from the bus communication to the key fob **201** of the e-Key module **200;**
6) encoding the recipient information in response communication (e.g., indicating the recipient's IP address in a header of the response communication);
7) encoding any information about the sender that may be required by communication protocol (e.g., adding a sender ID to the header of the response communication);
8) encrypting the response to be compatible with any encryption protocol of communication bus or of the PKES system; and
9) sending the final response communication/signal onto communication Bus.

The above steps may be performed in alternative orders, which may not be limited to the above listing or numbering. It will be appreciated that the processing of bus communication may include all or may not be limited to the above steps.

In some embodiments, the e-Key module may be configured to ensure that the PKES system (e.g., the PKES controller) receives the response communication from its key fob **201** before or instead or any other response from the PKES component. In one embodiment, the e-Key module can prevent the PKES system from receiving the "true" response communication from a native component (e.g., request switches **206,** antenna **207,** engine controller, start/stop button **208,** brake pedal **209,** etc.) of the PKES system by ensuring that its response is received first by the PKES controller or by intercepting any alternative response message/communication.

Figure **6A** presents a schematic representation of one of the possible embodiments of the control interface for the driver's device **10.** This can be provided by the e-Key software or server connection **11** (illustrated in Figures **3A** and **3B**), e.g., when executed by a processor of the driver's device. The interface may comprise various features, information, settings and controls of the state-of-the-art. In the embodiment shown in Figure **6A****,** the interface is a smartphone App that can be downloaded and installed onto the driver's device (e.g., smartphone) and may provide the user with the controls/options to lock or unlock the vehicle using dedicated controls and/or with a control to open or close or close and lock the trunk/tailgate using a dedicated control. The interface may visually indicate to the user when it is connected to the e-Key module **200** (e.g., by means of a remote communication status/signal indicator), when it is determined to be outside the vehicle within a reasonable distance (e.g., by means of an outside proximity indicator), when it is determined to be inside the vehicle (e.g., by means of an inside position status indicator), etc.

As shown in Figure **6A****,** the e-Key module may optionally provide the user with controls over a remote engine starting and/or stopping of the vehicle. In some embodiments, the e-Key module can provide this remote engine start/stop by providing additional connections to the vehicle's components (e.g., the engine control unit) considered by the PKES system to enable the start of the engine. For example, a PKES system may consider the conditions for initiating a start-engine sequence to be fulfilled when a "engine start/stop request" is completed, which can comprise a combination of simultaneously signals (e.g., pushing of a start engine button and of the brake pedal). Therefore, in some embodiments, the e-Key module may comprise a connection to various inside request switches, for example, the start/stop button and to the brake pedal to enable remote start of the engine.

In some embodiments, the engine control unit of the PKES controller **277** or system **220** can vary depending on the type, brand or model of the vehicle. In some cases, the engine control unit can comprise, be may not be limited to, a combination of start/stop button trigger and brake pedal trigger, an ignition system and components (IGN), of dedicated communication/messages/data that can be used for determining the status engine and/or communication engine start/stop commands, or a combination thereof. In that sense, the following method may be adapted to any type of engine control unit and associated start sequence to be compatible with the PKES system of the vehicle and enable remote start/stop of the vehicle.

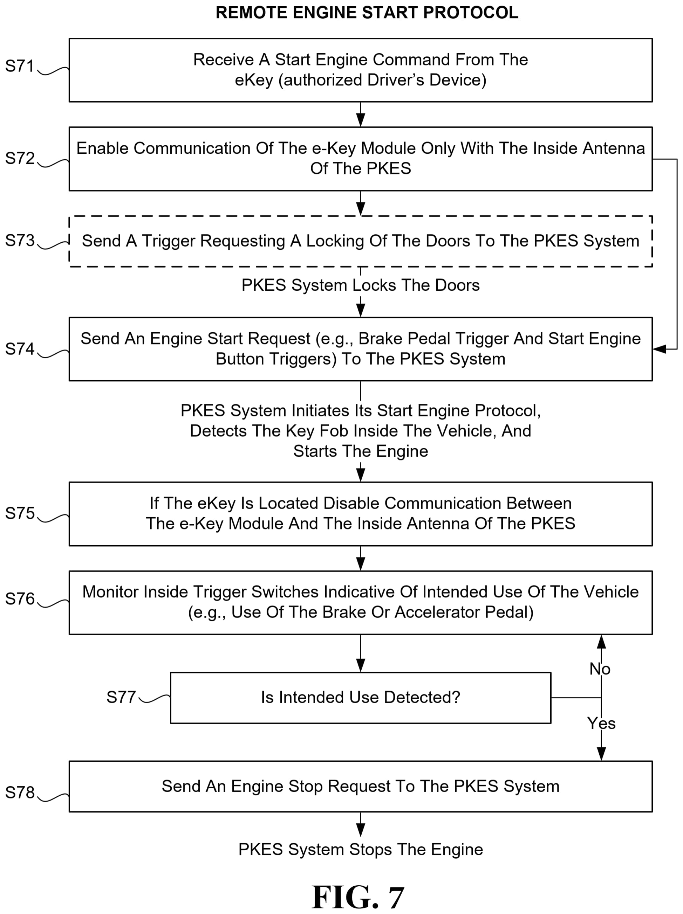

Figure 7 presents a flowchart of a remote start protocol used by one of the possible embodiments of the e-Key module **200** to provide the user with a remote start of the vehicle's engine. In this exemplary embodiment, the proposed device may require additional connections to (e.g., splicing into their wires connected to the PKES controller **277**) the brake pedal and the start/stop button of the vehicle.

The method for providing the remote start of the engine may be initiated by a first step **S71** of receiving a corresponding request/command from the driver's device, which may be selected by the user through the App interface illustrated in Figures **6A** to **6C****.**

When the request is received, the e-Key module may first complete step **S72** to enable/establish communication between at least one inside-antenna and the key fob to ensure that the key fob is detected by the PKES system as being located before triggering the start engine protocol of the PKES system. In one embodiment, this can be achieved by closing a switch on a connection between the key fob **201** and the inside-antenna **221.**

In some embodiments, in order to provide additional security (e.g., to prevent some other than the person holding the driver's device from entering the vehicle once the engine is started), the e-Key module can execute step **S73** of sending to the PKSE controller a request to lock the doors. Once the PKES system receives/detects the request/trigger to lock the doors, the PKES controller **277** can initiate a corresponding protocol, which may comprise verifying that the key fob is located at a corresponding position.

Step **S74** can be completed to send a start-engine-request to the PKES controller **277** to initiate an engine start protocol. The start-engine-request may comprise the combination of a brake pedal and a start-stop button switch signal or various alternative depending on the vehicle model. Once the PKES system receives/detects the start-engine request/triggers, the PKES controller **277** can initiate a corresponding protocol, which may comprise verifying that the key fob is inside the vehicle and that the brake pedal is being pressed.

It will be appreciated that steps **S72, S73, S74** may all be initiated simultaneously or in a very short sequence.

Once the engine is running, the e-Key module may complete the remaining steps of Figure **7** to provide security to the vehicle to prevent unauthorized use of the vehicle (e.g., to prevent someone driving off with the vehicle). In some embodiments, the e-Key module can preferably complete step **S75** of disabling the connection established in step **S72** if the driver's device is not detected by the e-Key module **200** to be inside the vehicle. It will be appreciated that, if the driver's device is located outside of the vehicle, step **S72** enabling communication between the inside-antenna of the PKES system and the key fob is preferably as short as possible.

In some embodiments, an additional security step **S76** may be required to ensure that someone does not drive off with the vehicle without being in possession of the driver's device. In one embodiment, at least one of the various possible functions (e.g., trigger switches) of the vehicle is monitored by the e-Key module **200** to detect any intended use of the vehicle (step **S77**) in order to trigger a shutting down of the vehicle's engine in response to any detected intended use **(S78).** In fact, many vehicles can be driven once the engine is being turned *On* without the need for the key fob to be located inside the vehicle. Therefore, to prevent someone driving off with the vehicle once the engine has been started, a shutoff request may preferably be sent to the PKES system immediately following the detection of an intended use of the vehicle. It will be appreciated that the required monitoring and detection of an intended use of the vehicle may vary depending on the vehicle model. In some cases, the vehicle requires the brake pedal to be pushed down when switching from parking (P) to any other gear (e.g., drive (D), Reverse (R), etc.) or the clutch pedal, such that this feature can be exploited to determine the intended use of the vehicle. Therefore, in some embodiments, the detection of a pressing of the brake pedal can serve as the trigger for a detection of intended use by the e-Key module **200.** The stop-engine-request may comprise the combination of a brake pedal and a start-stop button switch signal or various alternatives depending on the vehicle model.

As illustrate in Figure **6A** to **6M****,** the control app can provide a vehicle control interface for each of the vehicle for which the driver's device is authorized to control/operate. Examples of such vehicle control interfaces are presented in Figures **6A** (genetic), **6B** for a first vehicle, and **6C** for a second vehicle.

The control app may provide a managing interface (e.g., as illustrated in Figure **6D****)** for each vehicle by selecting the corresponding *link* to the managing interface that is identified in Figure **6A****.**

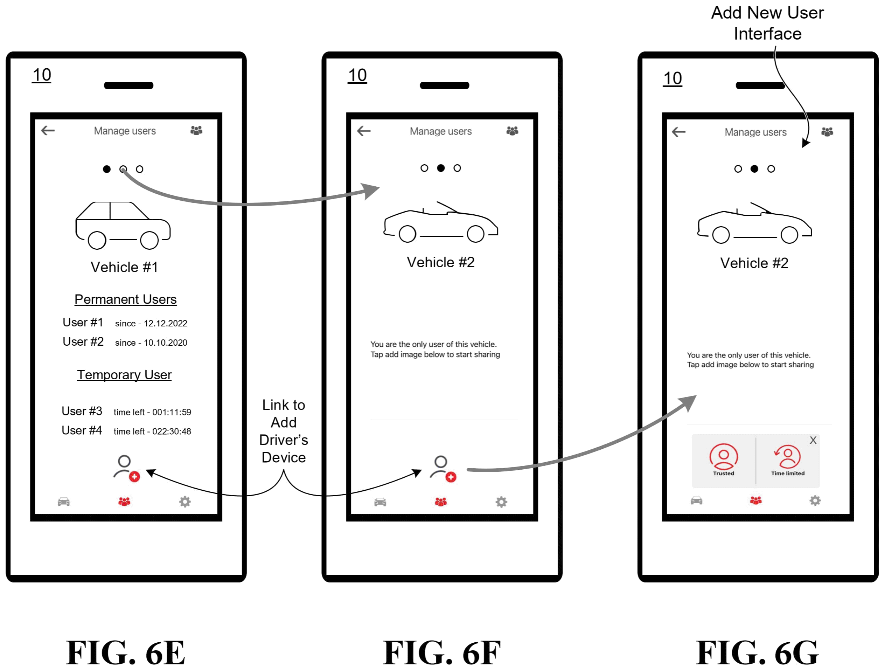

The interface for managing users (e.g., as illustrated in Figures **6E** and **6F****),** which may be accessed from a managing interface (e.g., see Figure **6D****),** can list the various authorized driver's devices (i.e., users) for the corresponding vehicle, if any, and whether each user is permanent or temporary and for how long. The interface for managing users may comprise a *link* to add a driver's device (user) to the corresponding vehicle.

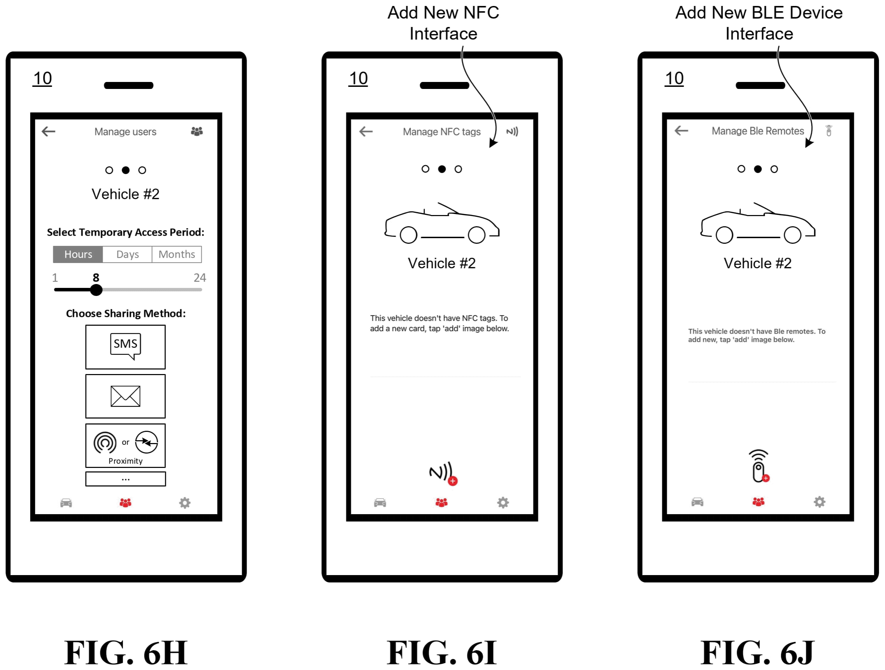

In one embodiment, the control app may be used to register additional driver's device **10** that may be authorized temporarily (for a limited selected or predefined period of time, e.g., 24 hours), indefinitely (e.g., until it is manually removed from the list of authorized driver's device) or permanently. As illustrated in Figure **6G****,** this option of choosing between permanently or temporarily authorizing a given user may be provided to a user through various embodiments of the control app and, as illustrated in Figure **6H****,** may comprise various control parameters including, but not limited to, a selection of the period of time of a temporary authorization (e.g., in hours, days, months, etc.), a selection of sharing method to provide/share access to a desired person (e.g., using SMS, email, proximity sharing such as QuickShare or Airdrop^{®}, etc.). In some case, the access shared using SMS or email must be sent to the phone number or email address associated with control app account of the desired person (e.g., double authentication may be used).

It will be appreciated that the driver's device can be an NFC device (e.g., NFC tag or a smartphone NFC functions or AirTag^{®}) that may be added and/or registered using an NFC reader of the e-Key module, which may be located such that it may be communicated with from the outside and inside the vehicle (e.g., glued on the windshield or on top of a dashboard near the windshield). As illustrated in Figure **6I**, some embodiments of the control app can be used to add (e.g., using the smartphone NFC functions or using an external NFC reader/programmer).

The driver's device can alternatively or additionally be provided by registering any suitable Bluetooth^{®} device (e.g., BLE device comprising a microcontroller unit (MCU) or a smartphone Bluetooth^{®} functions) that may be added and/or registered using ant Bluetooth^{®} functions (e.g., pairing) of the e-Key module and/or the control app. As illustrated in Figure **6J****,** some embodiments of the control app can be used to add and register a BLE device.

In some embodiments, the e-Key module can optionally perform and/or request an additional authenticating step to validate that the driver's device is authorized and/or that the person in possession of the driver's device, specifically, is an authorized user. Authentication may be required during the first connection between the driver's device **10** and the e-Key module **200** (e.g., when first pairing Bluetooth^{®} or UWB), or at any desired/programmed moment of frequency. The authentication step can be a particularly important security feature that may be desirable when adding a new driver's device by registering a new driver's device with the e-Key module to be considered as an authorized driver's device, especially when the adding of a new driver's device is completed using an already registered/authorized driver's device. The authentication may be performed by the analyzer **203** and using communications between the wireless transceiver **202** of the e-Key module **200** and the driver's device **10.** The authenticating step may comprise one or more of:
- Validation of the pairing code/credentials (e.g., over Bluetooth^{®} or UWB);
- Validating the authenticating credentials (e.g., by exchanging personal ID data stored on the authorized smartphone) of a driver's device (e.g., smartphone) or secondary/alternative/emergency driver's devices (e.g., a Bluetooth^{®}, an UWB, an NFC and/or an RFID device) of the authorized user;
- Requiring (e.g., with the driver's device or through the smartphone app) an active (i.e., when required, sometimes in the authentication process) authentication/identification input of the authorized user of (e.g., by asking to enter an identifying password or biometrics on an app on the driver's device - e.g., smartphone -); or
- A combination thereof.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

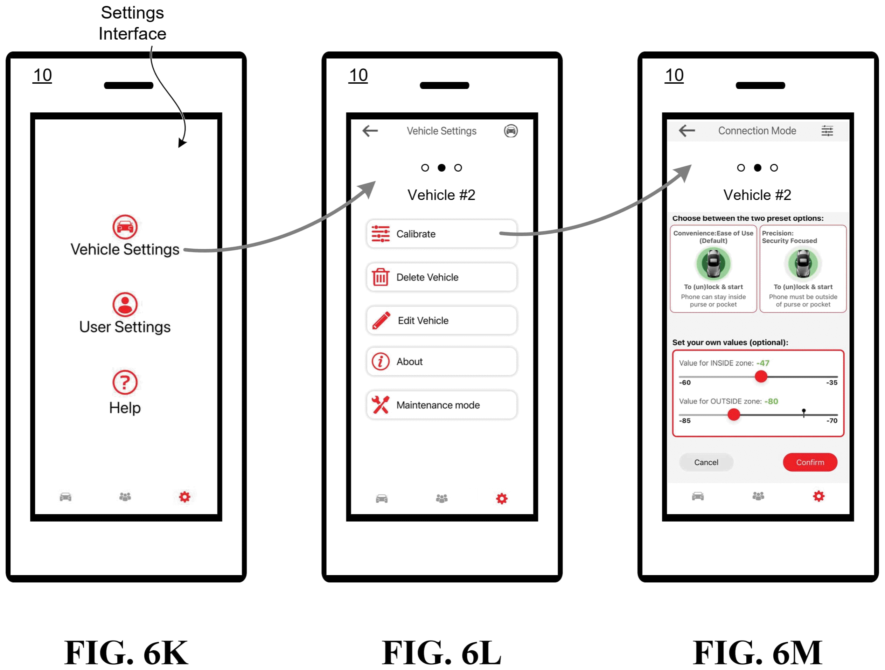

The control app may provide a settings interface (e.g., as illustrated in Figure **6k****)** for each vehicle, for various user settings and for various app settings by selecting the corresponding *link* to the managing interface that is identified in Figure **6A****.** Examples of some of the possible vehicle settings are listed and presented in Figures **6L****,** including calibration settings details in the interface of Figure **6M****.**

As previously mentioned, the e-Key module may be calibrated to ensure accurate determination of the location/position (e.g., distance) of the driver's device relative to the vehicle. The calibration settings in Figure **6M** shows possible calibration settings that may be manually adjusted to improve the accuracy of the e-Key module, specifically of step **S120.**

It will be appreciated that the e-Key module may also be equipped with any suitable additional components to enable and provide any state-of-the-art features of embedded key fob apparatus. For example, the e-Key may be equipped with any state-of-the-art button actuator for pushing any button of the embedded key fob **201.**

## Claims

1. A vehicle control device for use with a vehicle having a passive keyless entry and start (PKES) system, the vehicle control device comprising:
a wireless interface for local communication with a driver's device, the wireless interface providing an authentication of the driver's device;
an analyzer for determining a position of the driver's device based on characteristics of signals from the local communication when the authentication from the wireless interface is provided, the position being one of:
inside the vehicle,
outside of the vehicle and within a *near-the-vehicle* threshold, and
outside of the *near-the-vehicle* threshold;
a key fob associated with the PKES system, the key fob having an antenna input for receiving challenge communications from the PKES system and having an antenna output connected to a radio frequency (RF) antenna for sending response communications to the PKES system, the key fob wirelessly sending a response communication to the PKES system; and
one selected from the group consisting of:
a) a key fob antenna;
a first switch connected between the key fob antenna and the antenna input of the key fob;
a challenge message receiver detecting a time point in a PKES challenge transmission;
the position determined by the analyzer as outside of the vehicle and within a *near-the-vehicle* threshold identifying one of a plurality of door locations of the vehicle where the driver's device is located; and
a first control circuit connected to the analyzer for controlling the first switch to selectively connect and disconnect the key fob from the key fob antenna as a function of the position and the time point,
b) the key fob antenna;
the first switch connected between the key fob antenna and the antenna input of the key fob;
the challenge message receiver detecting a time point in a PKES challenge transmission;
a plurality of door contact connections each corresponding to one of the plurality of door locations of the vehicle; and
a second control circuit connected to the plurality of door contact connections and to the analyzer for controlling the first switch to selectively connect and disconnect the key fob from the key fob antenna as a function of the position and the time point,
c) an internal antenna switch and at least one external antenna switch connected to the antenna input of the key fob;
a plurality of door contact connections each corresponding to one of the plurality of door locations of the vehicle; and
a third control circuit connected to the plurality of door contact connections and to the analyzer for controlling the internal antenna switch and the at least one external antenna switch to selectively connect and disconnect the antenna input of the key fob as a function of the position, and
d) the internal antenna switch and the at least one external antenna switch connected to the antenna input of the key fob;
the position determined by the analyzer as outside of the vehicle and within a *near-the-vehicle* threshold identifying one of the plurality of door locations of the vehicle where the driver's device is located; and
a fourth control circuit connected to the analyzer for controlling the internal antenna switch and the at least one external antenna switch to selectively connect and disconnect the antenna input of the key fob as a function of the position;
wherein, when the position is outside of the vehicle and within a *near-the-vehicle* threshold, the controlling of the first switch allows the key fob to respond to the PKES challenge transmission to allow the PKES system to determine that the key fob is located at the one of the plurality of door locations;
wherein, when the position is inside the vehicle, the controlling of the first switch allows the key fob to respond to the PKES challenge transmission to allow the PKES system to determine that the key fob is located inside the vehicle; and
wherein, when the driver's device is not authenticated or when the position of the driver's device is determined to be outside of the *near-the-vehicle* threshold or is not detected, the control circuit disables the key fob or disconnects the antenna input, thereby resulting in the PKES interpreting an absence of the response communication as corresponding to an absence of any authorized key fob.

2. The vehicle control device as defined in claim 1, wherein the device further comprises a processor and non-transient memory storing instructions that, when executed by the processor, causes the processor to perform functions of at least one of the analyzer, the switch control circuit and, optionally, of the challenge message receiver.

3. The vehicle control device as defined in claim 1 or 2, wherein said driver's device is a smartphone.

4. The vehicle control device as defined in any one of claims 1 to 3, wherein said wireless interface comprises an ultra-wide-band device or a Sub-GHz communication device, wherein said position of the driver's device is a precise location of the driver's device relative to the vehicle, and wherein said analyzer determines said precise location based on characteristics of signals from the ultra-wide-band device or said Sub-GHz communication device.

5. The vehicle control device as defined in any one of claims 1 to 3, wherein said position of the driver's device is determined by detecting a triggering signal from at least one outside request switch of the vehicle.

6. The device as defined in any one of claims 1 to 5, wherein the plurality of door contact connections comprises:
a driver's door request switch, and at least one of the group consisting of:
a front-passenger's door request switch,
an exterior trunk request switch, or
a trunk close-and-lock request switch.

7. The device as defined in any one of claims 1 to 6, wherein the plurality of the external antennas comprises:
a driver's door outside-antenna, and at least one of the group consisting of:
a front-passenger's door outside-antenna, or
a rear outside-antenna.

8. The device as defined in any one of claims 1 to 6, wherein the device further comprises a processor and non-transient memory storing instructions that, when executed by the processor, causes the processor to perform functions of at least one of the groups consisting of: the analyzer; the first control circuit; the second control circuit; the third control circuit; and the fourth control circuit.

9. A method for operating a vehicle having a passive keyless entry and start (PKES) system by selectively connecting a key fob of an embedded key fob vehicle control system to antenna signals of the PKES system as a function of a driver's device position relative to the vehicle, the method comprising:
detecting and authenticating the driver's device;
establishing one of:
(1) a wired connection path connecting challenge communications from the PKES destined for an outside-antenna to a key fob antenna input; and
(2) a connection between the key fob antenna input and a key fob antenna for receiving challenge communications from the PKES system;
determining a position of the driver's device relative to the vehicle; and
when the driver's device is detected and authenticated:
(i) when the position is determined to be inside the vehicle, performing one of:
(a) revealing the key fob,
(b) powering the key fob,
(c) connecting a key fob antenna output to a radio frequency (RF) antenna for transmitting a key fob communication to the PKES, and
(d) connecting the PKES system to the key fob antenna input so that an inside-antenna challenge communication from PKES is received by the key fob using one of:
(1) a wired connection between the key fob antenna input and a PKES component associated with an inside-antenna of the PKES system, or
(2) a key fob antenna connection between the key fob antenna input and the key fob antenna;
so that a response communication from the key fob in response to the inside-antenna challenge communication results in the PKES considering that the key fob is located inside the vehicle;
(ii) when the position is determined to be within a *near-the-vehicle* threshold and not inside the vehicle, performing one of:
(a) connecting, using at least one wired outside-antenna connection, a PKES component associated with an outside-antenna of the PKES as a function of:
(1) the determined position of the driver's device, or
(2) a received triggering request switch signal from the outside-antenna, so that the key fob antenna input receives only an outside-antenna challenge communication therefrom; or
(b) determining a time point in a PKES challenge transmission and performing a timing-based control of the key fob antenna connection between the key fob antenna input and the key fob antenna as a function of the determined time point and one of:
(1) the determined position of the driver's device; or
(2) the received triggering request switch signal from the outside-antenna,
so that a response communication from the key fob in response to outside-antenna challenge communications results in the PKES considering that the key fob is located (I) nearest the determined position of the driver's device or (I) nearest the outside-antenna; and
(iii) when the position of the driver's device is not detected, not authenticated or is determined to be outside of the *near-the-vehicle* threshold, disabling the key fob or prevent any challenge communication by disconnecting the key fob antenna input from any wired connection path connecting challenge communications sent from the PKES or from the key fob antenna.

10. The method as defined in claim 9, wherein, when the position is determined to be within a *near-the-vehicle* threshold and not inside the vehicle, said connecting said response communication to the key fob comprises detecting any triggering of a request switch of the PKES system and momentarily connecting to the input of the key fob the challenge communication sent from the PKES to an outside-antenna corresponding to the triggered request switch to the key fob.

11. The method as defined in claim 9 or 10, wherein, when the position is determined to be within a *near-the-vehicle* threshold and not inside the vehicle, said determining of said time point and said performing of said timing-based control are performed, wherein said timing-based control comprises:
disconnecting said key fob antenna from said key fob antenna input or attenuating signals from said PKES system received by said key fob antenna before it reaches said key fob antenna input and
connecting said key fob antenna to said key fob antenna input or amplifying signals from said PKES system received by said key fob antenna before it reaches said key fob antenna input
as a function of the determined time point, on a length individual signals of a signal sequence from the PKES system, on an order of the individual signals in the signal sequence from the PKES system, and (I) the determined position of the driver's device or (II) the received triggering request switch signal from said outside-antenna.

12. The method as defined in any one of claims 9 to 11, wherein the determining of the position comprises determining a distance between a transceiver of the embedded key fob vehicle control system and the driver's device based on a signal strength of wireless communications therebetween.

13. The method as defined in any one of claims 9 to 12, wherein the position is determined using ultra-wide-band or Bluetooth^{®} or Sub-GHz communication.

14. The method as defined in any one of claims 9 to 13, wherein the establishing the wired connection path comprises selectively closing a switch on said wired connection path.

15. The method as defined in any one of claims 9 to 14, wherein said challenge communication of said PKES system is a first bus communication to said inside-antenna when said driver's device is determined to be located inside said vehicle or is a second bus communication to said outside-antenna when said driver's device is determined to be located outside said vehicle within said *near-the-vehicle* threshold.
